# EUROPÄISCHE PATENTSCHRIFT

(11) **EP 3 785 345 B1**
(45) Veröffentlichungstag und Bekanntmachung des Hinweises auf die Patenterteilung: **06.07.2022**
(21) Anmeldenummer: 19717891.6
(22) Anmeldetag: 12.04.2019
(51) Int. Cl.: H02J 3/38, H02M 7/00, H02J 3/24, H02J 3/26, H02J 3/01, H02J 3/36, H01F 38/00

(54) **LEISTUNGSELEKTRONISCHE VORRICHTUNG MIT TRANSFORMATOREINRICHTUNG UND VERFAHREN**
POWER-ELECTRONIC DEVICE COMPRISING A TRANSFORMER UNIT AND METHOD
DISPOSITIF ÉLECTRONIQUE DE PUISSANCE À ÉQUIPEMENT DE TRANSFORMATEUR ET PROCÉDÉ

(30) Priorität: 24.04.2018 DE 102018109868
(43) Veröffentlichungstag der Anmeldung: 03.03.2021
(73) Patentinhaber: SMA Solar Technology AG, 34266 Niestetal (DE)
(72) Erfinder: UMLAUF, Sebastian, 34117 Kassel (DE)
(74) Vertreter: Lahnor, Peter
(86) Internationale Anmeldenummer: PCT/EP2019/059571
(87) Internationale Veröffentlichungsnummer: WO 2019/206691

(56) Entgegenhaltungen:
- DE-A1-102013 200 520
- US-A- 5 093 646
- US-A1- 2006 285 370
- US-A1- 2008 049 468
- US-B1- 7 362 206

## Beschreibung

Die Erfindung bezieht sich auf eine leistungselektronische Vorrichtung mit mindestens zwei Wechselrichtern und einer Transformatoreinrichtung. Die Wechselrichter sind AC-seitig mit der Transformatoreinrichtung verbunden und die Transformatoreinrichtung ist sekundärseitig mit einem Stromverteilungsnetz verbindbar. Zur Transformation eines Spannungsniveaus oder einer galvanischen Trennung zwischen den Wechselrichtern und dem Stromverteilungsnetz umfasst die Transformatoreinrichtung eine Kernanordnung, mindestens eine Primärwicklung und mindestens eine Sekundärwicklung, welche die Kernanordnung zumindest abschnittweise umwickeln.

Die Erfindung betrifft auch eine Transformatoreinrichtung, welche als Transformatoreinrichtung der leistungselektronischen Vorrichtung verwendbar ist.

Die Erfindung betrifft auch ein Verfahren zur Dämpfung von hochfrequenten Anteilen im Ausgangsstrom einer leistungselektronischen Vorrichtung. Das Verfahren kann mit der erfindungsgemäßen leistungselektronischen Vorrichtung durchgeführt werden.

Leistungselektronische Vorrichtungen der eingangs genannten Art sind aus dem Stand der Technik bekannt, beispielsweise als Bestandteil von Anlagen mit Gleichspannung erzeugenden Energiequellen zur Einspeisung von elektrischer Energie in ein Mittelspannungsnetz. Anlagen mit leistungselektronischen Vorrichtungen der eingangs genannten Art können beispielsweise als Energiequellen Windkrafträder und/oder Solarmodule und/oder Batterien umfassen. Derartige Anlagen können mit mehreren Wechselrichtern ausgestattet sein, die dann beispielsweise jeweils einer Untereinheit an Energiequellen zugeordnet sind. Die einzelnen Wechselrichter werden auch mit Leistungsstufen (Stacks) bezeichnet. Bei ausgedehnten Anlagen mit entsprechend hohen Leistungen ist eine derartige Ausgestaltung mit mehreren Wechselrichtern oftmals kostengünstiger als die Verwendung eines einzigen, entsprechend leistungsstarken Zentral-Wechselrichters. Die Leistungsstufen wandeln die von der Untereinheit der Anlage bereitgestellte Gleichspannung in Wechselspannung um. Bei den Wechselrichtern kann es sich um einphasige oder mehrphasige Wechselrichter handeln, beispielsweise um dreiphasige Wechselrichter. Auch kann es sich bei den Wechselrichtern um uni- oder bidirektionale Wechselrichter handeln. Die Wechselrichter können eine entsprechende Anzahl von Halbbrücken umfassen, die eingangsseitig mit einer Gleichspannung beaufschlagt werden und mittels Taktung von Leistungshalbleiterschaltern der Halbbrücken an den einzelnen Phasenausgängen des Wechselrichters einen näherungsweise sinusförmigen Strom bereitstellen, dem allerdings noch hochfrequente Stromrippel überlagert sind. Diese Stromrippel können auch mit hochfrequenten Anteilen im Ausgangsstrom bezeichnet werden. Entsprechend umfasst auch die Ausgangsspannung des Wechselrichters hochfrequente Anteile in der Ausgangsspannung. Zur Dämpfung der hochfrequenten Anteile des Ausgangsstromes bzw. der Ausgangsspannung sind den Halbbrücken nachgeschaltete Drosselspulen bekannt. Die mit gleicher Phase beaufschlagten Ausgangsleitungen der mindestens zwei Wechselrichter werden üblicherweise im Nachgang einer ersten Drosselspule zusammengeführt und über eine zweite Drosselspule geführt. Bei den bekannten leistungselektronischen Vorrichtungen der eingangs genannten Art wird die derart gedämpfte Ausgangsspannung sodann zur Anpassung eines Spannungsniveaus und/oder zur galvanischen Trennung primärseitig einem Transformator zugeführt. Beispielsweise offenbaren die Patentanmeldungen DE 10 2013 200520 A1 und US 2008/049468 A1 solche Vorrichtungen.

Entscheidend für die Stromaufteilung der einzelnen Leistungsstufen (Wechselrichter, Stacks) ist die Induktivität der einzelnen Wicklungen der Drosselspulen (auch mit Sinusfilterdrosseln bezeichnet) und ihre Kopplungen zu den jeweils anderen Sinusfilterdrosseln. Trotz hoher Fertigungsgenauigkeiten können zum Teil große Abweichungen in der Stromsymmetrie entstehen. Dies hat eine Leistungseinbuße zur Folge, sobald eine der leistungselektronischen Stufen (Stack) ihren maximalen Ausgangsstrom erreicht hat. In einem solchen Fall wird das verbaute Material nicht voll ausgesteuert und unter Umständen kann die Summe der Wechselrichter nicht die gewünschte Nennleistung erbringen. Auch ist bei der Verwendung mehrerer Wechselrichter in einer leistungselektronischen Vorrichtung der eingangs genannten Art nachteilig, dass die Anzahl an benötigten Sinusfilterdrosseln steigt und diese jeweils mehrere 100kg wiegen können und Verluste aufweisen. Die Verluste führen zu einer Reduktion des Wirkungsgrades der leistungselektronischen Vorrichtung, beispielsweise von ca. 0,5% bei voller Aussteuerung der Wechselrichter. Zudem müssen die Verluste der Sinusfilterdrosseln mittels eines Kühlsystems abgeführt werden, wodurch sich die Kosten für das thermische Management und das Bauvolumen der leistungselektronischen Vorrichtung erhöhen.

Der Erfindung liegt die Aufgabe zugrunde, eine leistungselektronische Vorrichtung der eingangs genannten Art, eine Transformatoreinrichtung der eingangs genannten Art und ein Verfahren der eingangs genannten Art anzugeben, mit welchen die genannten Nachteile des Standes der Technik zumindest teilweise reduziert oder ganz vermieden werden können.

Die Aufgabe wird erfindungsgemäß bei einer leistungselektronischen Vorrichtung der eingangs genannten Art dadurch gelöst, dass die Kernanordnung mindestens zwei Zeilen von zueinander benachbart angeordneten Kernschenkeln umfasst, wobei die Kemschenkel je Zeile über Jochverbindungen miteinander verbunden sind. Es ist zudem mindestens eine spezielle elektrische Verbindung zwischen einem Phasenausgang eines Wechselrichters und einem Primärwicklungsanfang einer Primärwicklung der Transformatoreinrichtung vorhanden, wobei für eine derartige spezielle elektrische Verbindung gilt:
Der Primärwicklungsanfang der Primärwicklung ist mit genau einem Phasenausgang eines der Wechselrichters elektrisch verbunden und die Primärwicklung ist im Wesentlichen um einen an ein erstes Kernfenster angrenzenden Kernabschnitt einer Zeile gewickelt. Zudem ist mindestens eine zweite, mit mindestens einem der Wechselrichter (insbesondere einem anderen Wechselrichter) elektrisch verbundene Primärwicklung derselben Phase im Wesentlichen um einen an ein Kernfenster einer anderen Zeile angrenzenden Kernabschnitt gewickelt, welcher von dem ersten Kernfenster beabstandet ist. Auch ist eine Sekundärwicklung derselben Phase abschnittsweise um einen an das erste Kernfenster angrenzenden Kernabschnitt und um einen an das zweite Kernfenster angrenzenden Kernabschnitt gewickelt.

Der Begriff "spezielle elektrische Verbindung" kann im Rahmen dieser Erfindung auch mit "speziell gedämpfte elektrische Verbindung" bezeichnet werden. Der Begriff "speziell gedämpfte elektrische Verbindung" verweist im Rahmen dieser Erfindung nicht auf dämpfende Bauteile innerhalb der Verbindung (derartige Bauteile können vorhanden sein, müssen aber nicht vorhanden sein), sondern auf eine Dämpfung einer über diese Verbindung übertragene Ausgangsspannung im Bereich der Transformatoreinrichtung. Der Begriff "speziell gedämpfte elektrische Verbindung" und "spezielle elektrische Verbindung" kann auch als Name für eine derartige Verbindung verstanden werden. Da eine Dämpfung einer über die "spezielle elektrische Verbindung"/"speziell gedämpfte elektrische Verbindung" übertragene Ausgangsspannung im Bereich der Transformatoreinrichtung erfolgt, kann insbesondere der Wechselrichter in seinem Inneren zwischen einer an den Phasenausgang angeschlossenen Halbbrücke des Wechselrichters und dem Phasenausgang als auch die spezielle elektrische Verbindung/speziell gedämpfte elektrische Verbindung frei von Drosselspulen ausgebildet sein.

Die Primärwicklungen weisen jeweils einen Primärwicklungsanfang und ein -ende auf. Als einzelne Primärwicklung wird im Rahmen dieser Erfindung auch eine Wicklung angesehen, welche schichtweise mit Abständen zwischen in Reihe geschalteten Untereinheiten der Primärwicklung auf der Kernanordnung angeordnet ist oder anders ausgedrückt, durch eine Reihenschaltung und/oder Parallelschaltung von Unterprimärwicklungen realisiert ist.

Sofern ein Primärwicklungsanfang einer Primärwicklungen mit genau einem Wechselrichter verbunden ist und ein Primärwicklungsanfang einer weiteren Primärwicklung mit genau einem anderen Wechselrichter verbunden ist, sind die beiden Primärwicklungen somit elektrisch nicht verbunden, außer gegebenenfalls an ihren Primärwicklungsenden. Beispielsweise können im Rahmen dieser Erfindung Primärwicklungen, deren Primärwicklungsanfänge mit unterschiedlichen Wechselrichtern verbunden sind, über ein gemeinsames Bezugspotenzial an ihren Primärwicklungsenden elektrisch verbunden sein. Jeder Phasenausgang eines Wechselrichters korrespondiert mit einer oder mehreren Primärwicklungen der Transformatoreinrichtung, wobei die Primärwicklungsanfänge mit dem Phasenausgang des Wechselrichters elektrisch verbunden sind. Im Folgenden soll der Ausdruck "die Primärwicklung ist einem Wechselrichter zugeordnet" derart verstanden werden, dass ihr Primärwicklungsanfang elektrisch mit einem Phasenausgang des Wechselrichters verbunden ist. Auch soll der Ausdruck "die Primärwicklung ist einem Phasenausgang zugeordnet" derart verstanden werden, dass ihr Primärwicklungsanfang elektrisch mit dem Phasenausgang verbunden ist.

Die Primärwicklungsenden können über ein gemeinsames Bezugspotenzial miteinander elektrisch verbunden sein. Bei dem Bezugspotenzial kann es sich beispielsweise um einen Neutralleiter handeln. Diese Ausgestaltung der Erfindung kann insbesondere bei einphasigen Wechselrichtern vorgesehen sein. Sofern die Wechselrichter mehrere Phasen aufweisen, deren Phasenverschiebung zueinander in Summe 360 Grad ergibt, können gemäß einem weiteren Ausführungsbeispiel der Erfindung die Primärwicklungsenden der dem Wechselrichter zugeordneten Primärwicklung elektrisch miteinander verbunden sein, beispielsweise in einer sogenannten Sternschaltung oder Eckschaltung (im Falle von drei Phasen beispielsweise Dreieckschaltung). Da sich die phasenverschobenen Spannungen an den Primärwicklungsenden im Sternpunkt gegenseitig aufheben, können in diesem Fall auch alle Primärwicklungsenden in einem Sternpunkt oder analog in einer Eckschaltung (im Falle von drei Phasen in einer Dreieckschaltung) miteinander elektrisch verbunden werden. Dieses Ausführungsbeispiel der Erfindung kann in einer speziellen Ausgestaltung beispielsweise dreiphasige Wechselrichter umfassen.

Ebenso wie bei den Primärwicklungen ist im Rahmen dieser Erfindung eine Sekundärwicklung auch dann noch als eine einzelne Sekundärwicklung zu bezeichnen, wenn diese mittels einer Reihenschaltung aus Unter-Sekundärwicklungen realisiert ist. Die je Phase mindestens eine von der Transformatoreinrichtung umfasste Sekundärwicklung weist ebenfalls ein Sekundärwicklungsanfang- und ende auf. Der Sekundärwicklungsanfang kann elektrisch mit mindestens einem Phasenanschluss der Transformatoreinrichtung verbunden sein. Üblicherweise weisen Transformatoreinrichtungen nur einen Phasenanschluss je Phase auf. An eine derartige Transformatoreinrichtung kann beispielsweise im Falle von dreiphasigen Wechselrichtern an entsprechend drei Phasenanschlüssen der Transformatoreinrichtung ein Stromverteilungsnetz mit drei Leitungen für ein Drehstrom-System angeschlossen sein. Es sind auch einphasige Stromverteilungsnetze mit zwei Leitungen, an denen die gleiche Phase anliegt (Split-Phase System), bekannt. Die erfindungsgemäße leistungselektronische Vorrichtung könnte in diesem Fall gemäß einem Ausführungsbeispiel eine einzige Sekundärwicklung umfassen, welche mit einem Sekundärwicklungsanfang elektrisch mit zwei Phasenanschlüssen der Transformatoreinrichtung verbunden ist. Gemäß einem anderen Ausführungsbeispiel könnte in diesem Fall die erfindungsgemäße leistungselektronische Vorrichtung aber auch zwei Sekundärwicklungen aufweisen, deren Sekundärwicklungsanfang mit je einem der beiden Phasenanschlüsse der Transformatoreinrichtung elektrisch verbunden ist.

Die Sekundärwicklungsenden können elektrisch über ein gemeinsames Bezugspotential miteinander verbunden sein. Beispielsweise über einen Neutralleiter. Sofern die Wechselrichter mehrphasig sind und die Phasen zueinander derart verschoben sind, dass die Summe der Phasenverschiebungen 360 Grad entspricht, können Sekundärwicklungsenden für alle Phasen auch in einer Sternschaltung oder einer Eckschaltung (im Falle von drei Phasen z.B. in einer Dreieckschaltung) zusammengefasst werden, beispielsweise indem alle Sekundärwicklungsenden in einer gemeinsamen Sternschaltung oder Dreiecksschaltung zusammengefasst werden.

Merkmalsgemäß ist die Primärwicklung der speziellen elektrischen Verbindung näher durch die Verbindung ihres Primärwicklungsanfangs mit genau einem Phasenausgang eines Wechselrichters charakterisiert. Auch ist die Primärwicklung im Wesentlichen um einen an ein erstes Kernfenster angrenzenden Kernabschnitt einer Zeile gewickelt. Im Wesentlichen bedeutet hier, dass im Wesentlichen alle ihre Wicklungen betroffen sind. Es können auch alle Wicklungen der Primärwicklung um den Kernabschnitt gewickelt sein. Der Kernabschnitt kann beispielsweise einen oder zwei Kernschenkel und/oder einen oder zwei Jochabschnitte umfassen. Die Primärwicklung kann zwischen Primärwicklungsanfang und -ende zusammenhängend gewickelt sein oder sich über voneinander beabstandete Unterwicklungen erstrecken, die in Reihe und/oder parallel zueinander geschaltet sind. Das Kernfenster kann beispielsweise von zwei benachbarten Kernschenkeln und zwei gegenüberliegenden Jochabschnitten eingefasst sein. Es können sich ein oder mehrere Shunts aus Kernmaterial durch das Kernfenster erstrecken. Um das Kernfenster herum ist ein geschlossener magnetischer Kreis ermöglicht. Merkmalsgemäß existiert mindestens eine zweite Primärwicklung derselben Phase. Mit anderen Worten ist die zweite Primärwicklung derselben Phase zugeordnet und mit ihrem Primärwicklungsanfang mit mindestens einem entsprechenden Phasenausgang eines Wechselrichters, insbesondere eines anderen Wechselrichters und/oder einer anderen Halbbrücke, elektrisch verbunden. Die zweite Primärwicklung erzeugt bei entsprechender Spannungsbeaufschlagung einen magnetischen Fluss um ein Kemfenster einer anderen Zeile herum. Die Zeile kann horizontal oder vertikal oder anders orientiert sein. Merkmalsgemäß ist auch eine Sekundärwicklung derselben Phase abschnittsweise um einen an das erste Kernfenster angrenzenden Kernabschnitt und um einen an das zweite Kernfenster angrenzenden Kernabschnitt gewickelt. Dies entspricht in einem Ersatzschaltbild der Transformatoreinrichtung einer Reihenschaltung der Streuinduktivität des ersten und zweiten Kernfensters, wodurch eine stärkere Dämpfung der in der Sekundärwicklung induzierten Spannung bewirkt wird. Dadurch kann eine in der speziellen elektrischen Verbindung angeordnete Drosselspule besonders klein dimensioniert werden oder ganz entfallen. Dies spart Materialkosten und Verluste ein. Es können zu der ersten und mindestens zweiten Primärwicklung auch eine oder mehrere weitere derart angeordnete Sekundärwicklungen vorhanden sein. Da die Primärwicklung der speziellen elektrischen Verbindung mit genau einem Wechselrichter elektrisch verbunden ist, hat ein Wegfall der Drosselspule keine unerwünschten Kreisströme zu anderen Wechselrichtern zur Folge. Der Wechselrichter kann insbesondere an dem zugehörigen Phasenausgang keine elektrischen Verbindungen zu anderen Primärwicklungen aufweisen. Beispielsweise kann der Wechselrichter an allen Phasenausgängen ausschließlich mittels einer speziellen elektrischen Verbindung primärseitig an die Transformatoreinrichtung angeschlossen sein. Es können auch alle oder im Wesentlichen alle Wechselrichter der leistungselektronischen Vorrichtung ausschließlich über spezielle elektrische Verbindungen, insbesondere entsprechend der Anzahl der Phasenausgänge, primärseitig an die Transformatoreinrichtung angeschlossen sein. Somit können die Drosselspulen geringer dimensioniert werden oder ganz entfallen. Unabhängig von den Drosselspulen kommt es in diesem Fall auch zu keiner Leistungseinbuße mehr, sobald eine der leistungselektronischen Stufen (Stack) ihren maximalen Ausgangsstrom erreicht hat. Die aus dem Stand der Technik bekannten Drosselspulen im Nachgang eines Phasenausgangs sind oftmals Teil eines LCL-Filters oder LC-Filters. Derartige Filter werden auch mit Sinusfilter bezeichnet. Erfindungsgemäß kann für die spezielle elektrische Verbindung sowohl die Drosselspule entfallen als auch der an die Verbindung angeschlossene Kondensator des Sinusfilters entfallen. Der Kondensator wird dann sekundärseitig der Transformatoreinrichtung angeordnet und kann als Hochspannungskondensator wesentlich kleiner dimensioniert werden. Dies ermöglicht eine weitere Reduzierung der Kosten.

Die mindestens zwei Wechselrichter der leistungselektronischen Vorrichtung können örtlich voneinander getrennt ausgebildet sein oder mindestens teilweise als bauliche Einheit ausgeführt sein. Weist die leistungselektronische Vorrichtung n Phasen auf, kann jeder der mindestens zwei Wechselrichter eine entsprechende Anzahl an Halbbrücken und Phasenausgängen aufweisen, wobei die im Inneren der Wechselrichter angeordneten Leistungspfade zwischen den Halbbrücken und den Phasenausgängen jeweils frei von Drosselspulen ausgebildet sein können.

Bei einer erfindungsgemäßen leistungselektronischen Vorrichtung sind gegenüber dem oben angeführten Beispiel einer leistungselektronischen Vorrichtung gemäß dem Stand der Technik erfindungsgemäß anstelle einer einzigen Primärwicklung mindestens zwei Primärwicklungen vorhanden, welche induktiv mit einer gemeinsamen Sekundärwicklung gekoppelt sind. Ein weiteres denkbares Ausführungsbeispiel einer leistungselektronischen Vorrichtung gemäß dem Stand der Technik könnte eine Anzahl von Wechselrichtern umfassen, die getrennt voneinander über separate Transformatoren eine Wechselspannung in ein Stromverteilungsnetz einspeisen. Die aus diesen separaten Transformatoren gedanklich zusammengesetzte Transformatoreinheit würde keine ausreichende Dämpfung gewährleisten, so dass bei leistungselektronischen Vorrichtungen der eingangs genannten Art des Standes der Technik eine Dämpfung der Ausgangsspannung mittels der sogenannten Sinusfilterdrosseln unumgänglich ist.

Eine erfindungsgemäße Transformatoreinrichtung kann beispielsweise aus einer der Wechselrichteranzahl entsprechenden Anzahl an separaten Transformatoren aufgebaut werden, indem die Transformatoren primärseitig mit je einem der Wechselrichter elektrisch verbunden sind und die Sekundärwicklungen der Transformatoren je Phase in Reihe geschaltet sind, bevor diese auf den Netzanschlusspunkt geführt werden.

Vorteilhafte Ausgestaltungen der Erfindung sind in der nachfolgenden Beschreibung und den Unteransprüchen angegeben, deren Merkmale einzeln und in beliebiger Kombination miteinander angewendet werden können.

Es kann vorteilhaft vorgesehen sein, dass die Sekundärwicklung derselben Phase abschnittsweise um einen an das erste Kernfenster angrenzenden Kernabschnitt und um einen an das zweite Kernfenster angrenzenden Kernabschnitt gewickelt ist, wobei die Kernabschnitte von dem jeweils anderen Kernfenster beabstandet sind.

Diese Ausgestaltung der Erfindung ermöglicht es, eine unabhängige Wahl für die Anzahl der Wicklungen des Sekundärwicklungsabschnitts für das erste und zweite Kernfenster vorzusehen.

Es kann auch als vorteilhaft angesehen werden, dass für die spezielle elektrische Verbindung gilt, dass die Kernabschnitte, um die die mit ihrem Primärwicklungsanfang an die spezielle elektrische Verbindung angeschlossene Primärwicklung und die mindestens zweite Primärwicklung und die Sekundärwicklung gewickelt sind, Kernschenkel sind.

Diese Ausgestaltung der Erfindung ermöglicht die Ausbildung der Zeilen in Form von Standard-Transformatorkernen. Die zueinander weisenden Jochverbindungen der Standard-Transformatorkerne können gemeinsam ausgebildet sein oder aneinander anliegend oder voneinander beabstandet angeordnet sein. Je nach Anzahl der Phasen der Wechselrichter kann es sich beispielsweise um Einphasen- oder Mehrphasen-Transformtorkeme handeln, die in Kern- oder Mantelausführung ausgebildet sind. Die zu der mindestens einen speziellen elektrischen Verbindung gehörige mindestens eine Sekundärwicklung erstreckt sich dann, abweichend von den bekannten Standard-Wicklungsanordnungen, über mindestens zwei, insbesondere über alle, Standard-Transformatorkerne hinweg.

Vorteilhafterweise kann weiter vorgesehen sein, dass die spezielle elektrische Verbindung frei von Spulen, insbesondere von Drosselspulen, ist.

Die erfindungsgemäße leistungselektronische Vorrichtung ermöglicht für die spezielle elektrische Verbindung die Verlagerung der Dämpfungsfunktion in die Transformatoreinrichtung, so dass die übliche Drosselspule in der speziellen elektrischen Verbindung entfallen kann. Dies ermöglicht eine Reduzierung der Herstellungskosten und der anfallenden Verlustwärme im Kernmaterial der Drosselspule, sowie der zusätzlichen Wicklungsverluste. Insbesondere kann auch ein üblicher Kondensator, der mit der üblichen Drosselspule als Teil eines LC- oder LCL-Filter angeordnet ist, für die spezielle elektrische Verbindung entfallen und beispielsweise sekundärseitig der Transformatoreinrichtung angeordnet werden. Insbesondere kann auch der mindestens eine Wechselrichter im Nachgang der vom Wechselrichter umfassten Halbbrücken frei von Drosselspulen sein.

Weiter kann vorteilhaft vorgesehen sein, dass der mindestens eine Phasenausgang der mindestens zwei Wechselrichter über eine spezielle elektrische Verbindung primärseitig mit der Transformatoreinrichtung verbunden ist.

Gemäß dieser Ausgestaltung der Erfindung können alle zwischen Wechselrichtern und Transformatoreinrichtung üblicherweise angeordneten Drosselspulen entfallen. Gemäß dieser Ausgestaltung der Erfindung umfasst die leistungselektronische Vorrichtung somit mindestens so viele Primärwicklungen, wie Wechselrichter. Dies ermöglicht den Einsatz von geringer dimensionierten Drosselspulen oder die Einsparung der sonst üblichen Drosselspulen oder des gesamten Sinusfilters. Die Phasenanschlüsse der Transformatoreinrichtung der erfindungsgemäßen Ausgestaltung der leistungselektronischen Vorrichtung können über eine Sternschaltung von Kondensatoren oder über eine Eckschaltung von Kondensatoren (im Falle von drei Phasen über eine Dreieckschaltung von Kondensatoren) elektrisch miteinander verbunden werden. Dies ermöglicht eine sekundärseitige, zusätzliche Dämpfung mit kleineren und kostengünstigeren Kondensatoren als bei den üblichen Sinusfiltern des Standes der Technik. Insbesondere kann der mindestens eine Phasenausgang der mindestens zwei Wechselrichter mit genau einer speziellen elektrischen Verbindung primärseitig mit der Transformatoreinrichtung verbunden sein. In diesem Fall entspricht die Anzahl der Primärwicklungen der Anzahl der Wechselrichter. Die Kernanordnung kann so viele Zeilen wie Wechselrichter umfassen, so dass die einem Wechselrichter zugeordneten Primärwicklungen um Kernabschnitte einer gemeinsamen Zeile gewickelt sein können.

Eine weitere vorteilhafte Ausgestaltung der Erfindung kann vorsehen, dass die Transformatoreinrichtung je Phase weniger Sekundärwicklungen als Wechselrichter umfasst, insbesondere je Phase genau eine Sekundärwicklung.

Die Sekundärwicklung kann gemäß dieser Ausgestaltung der Erfindung mit mindestens zwei Primärwicklungen der Phase induktiv gekoppelt sein und sich beispielsweise über mindestens zwei Zeilen erstrecken. Dies erhöhte die Dämpfung für jede der Sekundärwicklungen. Die mindestens zwei Primärwicklungen können mit disjunkten Mengen der Wechselrichter elektrisch verbunden sein. Dies ermöglicht eine zueinander verschobene Taktung der disjunkten Mengen an Wechselrichtern. Beispielsweise kann die Sekundärwicklung mit allen Primärwicklungen der Phase induktiv gekoppelt sein, welche insbesondere mit disjunkten Mengen der Wechselrichter elektrischen verbunden sein können. Die Sekundärwicklung kann sich beispielsweise über mindestens zwei, insbesondere im Wesentlichen über alle oder alle Zeilen der Kernanordnung erstrecken.

Gemäß einer vorteilhaften Ausgestaltung der Erfindung können die mindestens zwei Wechselrichter derart eingerichtet und ausgebildet sein, dass im Betrieb die Phasen eines jeden Wechselrichters gegeneinander eine Phasenverschiebung aufweisen, so dass die Summe der Phasenverschiebungen 360 Grad entspricht, und die Primärwicklungsenden der mit einem Wechselrichter elektrisch verbundenen Primärwicklungen elektrisch miteinander verbunden sind, insbesondere in einem Sternpunkt oder einer Eckschaltung, welche im Falle von drei Phasen einer Dreieckschaltung entspricht.

Gemäß dieser Ausgestaltung der Erfindung können auch alle Primärwicklungsenden in einem gemeinsamen Sternpunkt oder Eckschaltung elektrisch miteinander verbunden sein, da sich die Spannungen untereinander aufheben.

Es kann auch als vorteilhaft angesehen werden, dass die mindestens zwei Wechselrichter dreiphasige Wechselrichter sind.

Dreiphasige Stromleitungsnetze sind weit verbreitet und ermöglichen beispielsweise die Versorgung mit Drehstrom.

Weiter kann vorteilhaft vorgesehen sein, dass die Sekundärwicklungsenden elektrisch miteinander verbunden sind, insbesondere in einem Sternpunkt.

Die Sekundärwicklungsenden können über einen Neutralleiter oder Erde miteinander elektrisch verbunden sein. Sofern die Phasen gegeneinander derart verschoben sind, dass die Summe der Phasenverschiebung 360 Grad ergibt, können die Sekundärwicklungsenden beispielsweise mittels einer Sternschaltung in einem Sternpunkt miteinander verbunden sein, da sich die Spannungen gegenseitig aufheben. Sie könnten aber auch mittels einer Eckschaltung, die im Falle von drei Phasen einer Dreieckschaltung entspricht, elektrisch miteinander verbunden sein. Gemäß einer weiteren Ausgestaltung der Erfindung können auch die Sekundärwicklungen selbst in einer Eckschaltung, die im Falle von drei Phasen einer Dreieckschaltung entspricht, elektrisch miteinander verbunden sein.

Eine vorteilhafte Ausgestaltung der Erfindung kann vorsehen, dass die Transformatoreinrichtung sekundärseitig mindestens zwei Phasenanschlüsse umfasst, wobei die Phasenanschlüsse jeweils zum Anschluss einer Leitung eines Stromverteilungsnetzes ausgebildet sind, und die Phasenanschlüsse der Transformatoreinrichtung mittels einer Sternschaltung von Kondensatoren oder mittels einer Dreieckschaltung von Kondensatoren elektrisch miteinander verbunden sind.

Diese Ausgestaltung der Erfindung eignet sich für Phasenverschiebungen, deren Summe 360 Grad entspricht. Die Kondensatoren bewirken eine zusätzliche Dämpfung und können, anders als bei den Sinusfiltern des Standes der Technik, wesentlich geringer dimensioniert werden. Allerdings sollten sie eine dem Stromleitungsnetz angepasste Spannungsfestigkeit besitzen. Die Zuführungsleitungen der Sternschaltung von Kondensatoren bzw. der Dreieckschaltung von Kondensatoren können von den an die Phasenanschlüsse angeschlossenen Leitungen des Stromverteilungsnetzes abzweigen oder von den Leitungen, die sich im Inneren der Transformatoreinrichtung von den Phasenanschlüssen bis zu den Wicklungsanfängen der Sekundärwicklungen erstrecken. Die Kondensatoren müssen nicht zwangsläufig außerhalb der Transformatoreinrichtung angeordnet werden. Beispielsweise können die Kondensatoren auch im Transformatoreinrichtungs-Kessel untergebracht sein. Dies reduziert einen Installationsaufwand. Die Dreieckschaltung von Kondensatoren eignet sich für eine leistungselektronische Vorrichtung mit dreiphasigen Wechselrichtern.

Es kann auch als vorteilhaft angesehen werden, dass die Kernanordnung einen Stapel von Einphasen- oder Mehrphasen-Transformatorkernen umfasst, welche in Kern- oder Mantelausführung ausgebildet sind, wobei die Transformatorkerne in Richtung der Kernschenkel aneinandergereiht angeordnet sind mit einander zugewandten Jochverbindungen, und die benachbarten Jochverbindungen gemeinsam ausgebildet sind und/oder aneinander anliegend und/oder parallel und voneinander beabstandet angeordnet sind.

Bei der Herstellung der Kernanordnung als integriertes magnetisches Bauteil kann gemäß dieser Ausgestaltung der Erfindung auf kostengünstige Standard-Bauteile zurückgegriffen werden, die geeignet miteinander verbunden werden und/oder Jochverbindungen gemeinsam ausbilden. Die Kernanordnung kann im Rahmen dieser Erfindung aus mehreren Bestandteilen zusammengesetzt aufgebaut sein oder einstückig ausgebildet sein.

Weiter kann es vorteilhaft vorgesehen sein, dass mindestens eine zwischen Kernschenkeln zweier benachbarter Zeilen angeordnete Jochverbindung zur Ausbildung eines Streukanals für Querflüsse eine Einlage aus ferromagnetischem Material umfasst oder aus ferromagnetischem Material besteht.

Die Jochverbindung kann beispielsweise mehrere derartige Einlagen umfassen.

Vorteilhafterweise kann auch vorgesehen sein, dass mindestens eine zwischen Kernschenkeln zweier benachbarter Zeilen angeordnete Jochverbindung eine parallel zu den Kernschenkeln weisende Dicke aufweist, welche gleich oder geringer ist als die Dicke der die Kernanordnung abschließenden Jochverbindungen.

Gemäß dieser Ausgestaltung der Erfindung teilen sich die beiden benachbarten Zeilen eine gemeinsame Jochverbindung. Die Jochverbindung kann sich über die gesamte Länge der Zeile erstrecken. Die Ausgestaltung spart Materialkosten.

Weiter kann vorteilhaft vorgesehen sein, dass die Anzahl der Zeilen der Anzahl der Wechselrichter entspricht, wobei jede Zeile eine der Phasenanzahl entsprechende Anzahl an Primärwicklungen umfasst und diese über eine spezielle elektrische Verbindung mit einem entsprechenden Phasenausgang eines gemeinsamen Wechselrichters verbunden sind.

Die Ausgestaltung ermöglicht den Wegfall aller Drosselspulen der üblichen Sinusfilter und kommt mit einer besonders geringen Anzahl an Primärwicklungen aus. Insbesondere kann je Phase genau eine Sekundärwicklung vorgesehen sein.

Eine vorteilhafte Weiterbildung der Erfindung kann vorsehen, dass eine Steuereinrichtung umfasst ist, welche derart ausgebildet und eingerichtet ist, dass im Betrieb der leistungselektronischen Vorrichtung mindestens zeitweise die Taktung der Wechselrichter zueinander derart verschoben ist, dass für mindestens eine spezielle elektrische Verbindung die Summe der am Primärwicklungsanfang der Primärwicklung anliegenden Spannung und der an der mindestens zweiten Primärwicklung zur selben Sekundärwicklung anliegenden Spannung einem Spannungsverlauf mit einer höheren Taktfrequenz entspricht, als die Taktfrequenzen der Spannungsverläufe der Einzelspannungen.

Gemäß dieser Ausgestaltung der Erfindung wird in der zu der mindestens einen speziellen elektrischen Verbindung zugehörigen Sekundärwicklung eine Spannung mit einem Spannungsverlauf mit höherer Taktfrequenz induziert, als die Taktfrequenzen der Spannungsverläufe der Einzelspannungen, wobei die eine der beiden Einzelspannungen an dem Primärwicklungsanfang der an die spezielle elektrische Verbindung angeschlossenen und mit der Sekundärwicklung induktiv gekoppelten Primärwicklung anliegt und die andere der beiden Einzelspannungen an dem Primärwicklungsanfang der mindestens zweiten Primärwicklung anliegt, die ebenfalls mit der Sekundärwicklung gemäß der Definition der speziellen elektrischen Verbindung gekoppelt ist. Da die dämpfende Wirkung einer Wicklung mit der Frequenz zunimmt, lässt sich mittels der Ausgestaltung der Erfindung die Dämpfung weiter erhöhen. Die an den beiden Primärwicklungen anliegenden beiden Einzelspannungen weisen Spannungsverläufe auf, deren Einhüllende sinusförmig ist und der gleichen Phase entsprechen. Oder mit anderen Worten handelt es sich bei den anliegenden Spannungen an den Primärwicklungen um Pulsweitenmodulierte-Taktspannungen, die gefiltert dem sinusförmigen Verlauf ähnelt. Bei entsprechend hoher Dämpfung der hochfrequenten Anteile in den Spannungsverläufen wird ein annähernd sinusförmiger Spannungsverlauf an der Sekundärwicklung ermöglicht. Die Pulsweitenmodulierte-Taktspannungen weisen Pulse im Spannungsverlauf auf, die beispielsweise rechteckförmig sind und aufgrund der Pulsweitenmodulation unterschiedliche Breiten haben. Mit der Taktfrequenz des Spannungsverlaufes sei die Frequenz bezeichnet, mit der die Pulse im Spannungsverlauf auftreten, beispielsweise die vorderen Flanken dieser Pulse. Diese Frequenz muss nicht konstant sein. Bei der vorliegenden Ausgestaltung ist im Betrieb der leistungselektronischen Vorrichtung mindestens zeitweise die Taktung der Wechselrichter zueinander derart verschoben, dass die Summe der beiden Einzelspannungen (die nur theoretisch betrachtet wird und nirgends real anliegt) einem Spannungsverlauf mit höherer Taktfrequenz entspricht. Die Pulse der Spannungsverläufe der Einzelspannungen werden somit derart zueinander verschoben, dass die Summe der beiden Spannungsverläufe theoretisch einer höheren Anzahl an Pulsen pro Zeit im Spannungsverlauf entspricht. Die Verschiebung der Taktung ist somit nicht derart, dass die Pulse der beiden Spannungsverläufe aufeinander zu liegen kommen.

Beruht die erfindungsgemäße Weiterbildung der Erfindung auf einer leistungselektronischen Vorrichtung gemäß der vorhergehenden Ausgestaltung und ist genau eine Sekundärwicklung je Phase umfasst, kann mittels einer zeitlichen Verschiebung der Taktfrequenzen - also eines zeitlichen Versatzes der Taktflanken je Phase - aller Wechselrichter eine besonders hohe Dämpfung realisiert werden.

Eine weitere Aufgabe der Erfindung ist es, ein Verfahren der eingangs genannten Art anzugeben, mit welchem die genannten Nachteile des Standes der Technik zumindest teilweise reduziert oder ganz vermieden werden können.

Erfindungsgemäß wird das Verfahren zur Dämpfung von hochfrequenten Anteilen im Ausgangsstrom einer leistungselektronischen Vorrichtung mit einer leistungselektronischen Vorrichtung durchgeführt, die eine Wechselrichteranordnung und eine Transformatoreinrichtung umfasst. Die Wechselrichteranordnung ist primärseitig mit der Transformatoreinrichtung elektrisch verbunden. In der Transformatoreinrichtung sind mindestens für eine erste Phase zwei Primärwicklungen induktiv mit einer gemeinsamen Sekundärwicklung gekoppelt. Bei dem Verfahren werden im Betrieb der leistungselektronischen Vorrichtung mindestens zeitweise mindestens die zwei Primärwicklungen mit Ausgangsspannungen gleicher Phase/zur gleichen Phase, aber mit unterschiedlichem Spannungsverlauf, von der Wechselrichteranordnung beaufschlagt, indem die Wechselrichteranordnung bezüglich der beiden Ausgangsspannungen mit zeitlich zueinander verschobenen Taktflanken angesteuert wird, so dass die Summe der beiden Ausgangsspannungen einem Spannungsverlauf mit einer höheren Taktfrequenz entspricht, als die Taktfrequenzen der Spannungsverläufe der beiden einzelnen Ausgangsspannungen.

Die Ausgangsspannungen sind der gleichen Phase zugeordnet. Beispielsweise kann es sich um die Ausgangsspannung von zwei Halbbrücken der Wechselrichteranordnung handeln, die zeitlich versetzt zueinander getaktet werden, wobei mittels einer Pulsweitenmodulation als Einhüllende des Ausgangssignals ein sinusförmiger Verlauf gleicher Phasenlage für beide Ausgangssignale entsteht und die Taktung aber dennoch zeitlich verschoben erfolgt, so dass die Summe der beiden Ausgangssignale einer höheren Taktfrequenz im Spannungsverlauf entspricht, deren Einhüllende hinsichtlich der Phasenlage nicht verschoben ist. Die Summe der beiden Ausgangssignale liegt weder an der einen noch der anderen Primärwicklung an. In der Sekundärwicklung wird allerdings, bedingt durch den Wicklungsaufbau, pro Transformatorkernzeile partiell eine Spannung induziert, welche sich somit insgesamt als Summe der einzelnen Zeilenspannungen zusammensetzen, so dass eine entsprechend höhere Dämpfung des Ausgangssignals in der Sekundärwicklung erfolgt. Insbesondere kann das Verfahren mit einer leistungselektronischen Vorrichtung durchgeführt werden, bei der in der Transformatoreinrichtung mindestens für eine erste Phase mehr als zwei Primärwicklungen induktiv mit einer gemeinsamen Sekundärwicklung gekoppelt sind. In diesem Fall können die mehr als zwei Primärwicklungen mit unterschiedlichen Ausgangsspannungen der Wechselrichteranordnung beaufschlagt werden, indem die Wechselrichteranordnung bezüglich der mehr als zwei Ausgangsspannungen mit zeitlich zueinander verschobenen Taktflanken angesteuert wird, so dass die Taktfrequenz des Spannungsverlaufs der Summe der mehr als zwei Ausgangsspannungen einer höheren Taktfrequenz entspricht, als die Taktfrequenz der einzelnen Ausgangsspannungen. Bezüglich der Definition einer Taktfrequenz eines Spannungsverlaufs sei auf die obigen Ausführungen hierzu verwiesen. Sofern alle Sekundärwicklungen der leistungselektronischen Vorrichtung mit mehreren Primärwicklungen induktiv gekoppelt sind, kann eine derart unterschiedliche Taktung der Primärwicklungen für alle Sekundärwicklungen erfolgen. Bei der Wechselrichteranordnung kann es sich um eine integrierte bauliche Einheit handeln. Die Wechselrichteranordnung kann aber auch separat angeordnete Wechselrichter umfassen.

Das erfindungsgemäße Verfahren kann mit der erfindungsgemäßen leistungselektronischen Vorrichtung nach einem der Ansprüche 1 bis 15 durchgeführt werden.

Bezüglich des Verfahrens sei auch auf die Definitionen, Erläuterungen, möglichen Ausgestaltungen und Ausführungsbeispiele zu den Vorrichtungsansprüchen verwiesen, die in analoger Weise auch auf das Verfahren anwendbar sind.

Eine weitere Aufgabe der Erfindung ist es, eine Transformatoreinrichtung der eingangs genannten Art anzugeben, mit welchem die genannten Nachteile des Standes der Technik zumindest teilweise reduziert oder ganz vermieden werden können.

Hierzu umfasst die Transformatoreinrichtung eine Kernanordnung und mindestens zwei Primärwicklungen und mindestens einer Sekundärwicklung, wobei die Primärwicklungen und die mindestens eine Sekundärwicklung die Kernanordnung zumindest abschnittweise umwickeln, wobei die Transformatoreinrichtung derart eingerichtet und ausgebildet ist, dass sie als Transformatoreinrichtung der leistungselektronischen Vorrichtung nach einem der Ansprüche 1 bis 15 verwendbar ist.

Bezüglich der Transformatoreinrichtung sei auch auf die Definitionen, Erläuterungen, möglichen Ausgestaltungen und Ausführungsbeispiele zu den Vorrichtungsansprüchen verwiesen, die bezüglich der dort beschriebenen Transformatoreinrichtung in analoger Weise auch auf die Transformatoreinrichtung nach Anspruch 17 anwendbar sind.

Weitere zweckmäßige Ausgestaltungen und Vorteile der Erfindung sind Gegenstand der Beschreibung von Ausführungsbeispielen der Erfindung unter Bezug auf die Figuren der Zeichnung, wobei gleiche Bezugszeichen auf gleich wirkende Bauteile verweisen.

Dabei zeigt die
Fig. 1 ein schematisches Schaltbild einer leistungselektronischen Vorrichtung nach dem Stand der Technik,
Fig. 2 ein schematisches Schaltbild einer leistungselektronischen Vorrichtung gemäß einem ersten Ausführungsbeispiel der Erfindung,
Fig. 3 ein vereinfachtes Ersatzschaltbild für einen einphasigen Transformator nach dem Stand der Technik mit Berücksichtigung der Streuinduktivität,
Fig. 4 ein Ersatzschaltbild für eine einphasige Transformatoreinrichtung gemäß einem zweiten Ausführungsbeispiel der Erfindung,
Fig. 5 einen Ausschnitt der in Figur 2 dargestellten Transformatoreinrichtung im Bereich der Transformator-Untereinheit 28 gemäß dem ersten Ausführungsbeispiel der Erfindung in einer Schnittansicht und in schematischer Darstellung,
Fig. 6 die in Figur 2 dargestellte Transformatoreinrichtung 22 in einer Schnittansicht und in schematischer Darstellung,
Fig. 7 ein Ablaufdiagramm eines Verfahrens gemäß einem dritten Ausführungsbeispiel der Erfindung, und
Fig. 8 ein Diagramm zur Verdeutlichung des Verfahrens nach Figur 7.

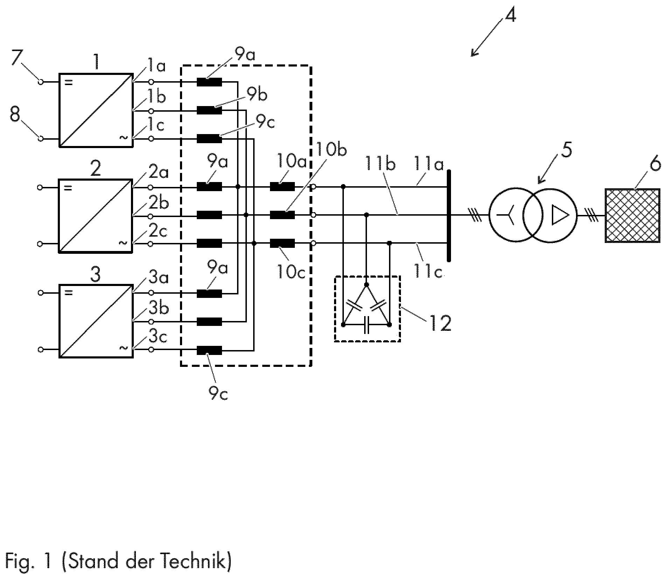

Die Figur 1 zeigt ein Schaltbild einer leistungselektronischen Vorrichtung 4 nach dem Stand der Technik. Die leistungselektronische Vorrichtung 4 umfasst drei dreiphasige Wechselrichter 1, 2, 3, die AC-seitig mit einem Transformator 5 primärseitig elektrisch verbunden sind. Der Transformator 5 ist sekundärseitig mit einem Stromverteilungsnetz 6 elektrisch verbunden, welches sich auf einem höheren Spannungsniveau befindet. Die Wechselrichter 1, 2, 3 weisen eingangsseitig jeweils einen Pluspol 7 und Minuspol 8 auf, die jeweils an einen Gleichspannung erzeugenden Generator (nicht dargestellt) angeschlossen sein können. Die gezeigten Wechselrichter 1, 2, 3 umfassen drei Halbbrücken (nicht dargestellt), die von der eingangsseitig am Wechselrichter anliegenden Gleichspannung gespeist werden und an den Phasenausgängen 1a, 1b, 1c bzw. 2a, 2b, 2c bzw. 3a, 3b, 3c jeweils eine Ausgangsspannung bereitstellen, die 120 Grad phasenverschoben zueinander sind. Die an den Phasenausgängen anliegenden Ausgangsspannungen weisen einen sinusförmigen Verlauf mit hochfrequenten Anteilen auf, weshalb in den elektrischen Verbindungen 11a, 11b, 11c zwischen den Wechselrichtern 1, 2, 3 und dem Transformator 5 den Phasenausgängen 1a, 1b, 1c usw. Sinusfilterdrosseln 9a, 9b, 9c und 10a, 10b, 10c zur Dämpfung dieser hochfrequenten Anteile nachgeschaltet sind. Die Phasenausgänge 1a, 2a, 3a gleicher Phase sind über die Sinusfilterdrosseln 9a elektrisch miteinander verbunden und über die weitere Sinusfilterdrossel 10a primärseitig an den Transformator 5 angeschlossen. Gleiches gilt analog für die anderen Phasenausgänge. Zur Erhöhung der Dämpfung sind die drei elektrischen Verbindungen 11a, 11b, 11c über eine Dreiecksschaltung 12 von Kondensatoren miteinander verbunden, wobei die Kondensatoren mit den Sinusfilterdrosseln ein LC-Filter ausbilden.

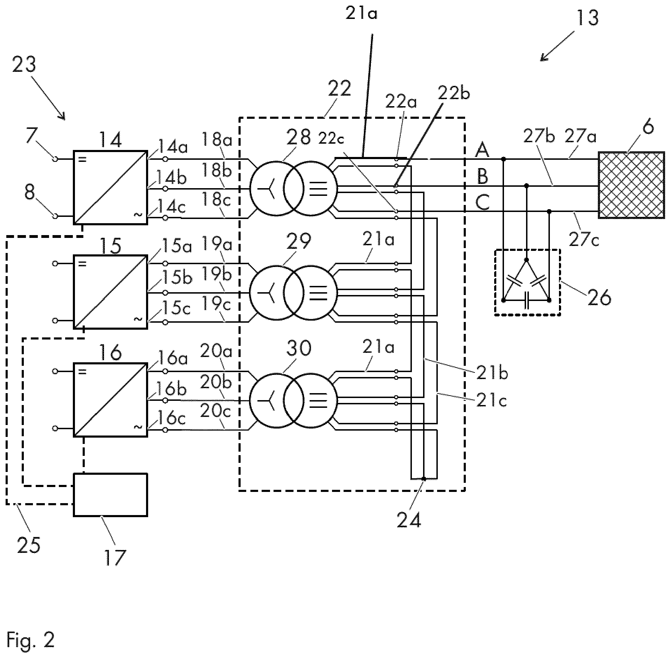

Die Figur 2 zeigt ein Schaltbild in schematischer Darstellung einer leistungselektronischen Vorrichtung 13 gemäß einem ersten Ausführungsbeispiel der Erfindung. Die leistungselektronische Vorrichtung 13 weist drei dreiphasige Wechselrichter 14, 15 und 16 auf, die jeweils über einen Pluspol 7 und einen Minuspol 8 mit einem oder mehreren Gleichspannung erzeugenden Generatoren (nicht dargestellt) verbunden sind. Die Wechselrichter 14, 15, 16 bilden eine Wechselrichteranordnung 23. Die Wechselrichter 14, 15, 16 sind primärseitig an eine Transformatoreinrichtung 22 angeschlossen, welches sekundärseitig mit einem Stromverteilungsnetz 6 verbunden ist.

Das Stromverteilungsnetz 6 stellt für Verbraucher (nicht dargestellt) ein Drehstrom-System zur Verfügung und weist drei Leitungen 27a, 27b und 27c für die drei Phasen A, B, C des Drehstroms auf, wobei die drei Leitungen 27a, 27b und 27c an Phasenanschlüsse 22a, 22b, 22c der Transformatoreinrichtung 22 angeschlossen sind. Die Leitungen des Stromverteilungsnetzes 6 sind über eine Dreieckschaltung 26 von Kondensatoren elektrisch miteinander verbunden, so dass auch die Phasenanschlüsse 22a bis 22c der Transformatoreinrichtung 22 über diese Dreieckschaltung elektrisch miteinander verbunden sind.

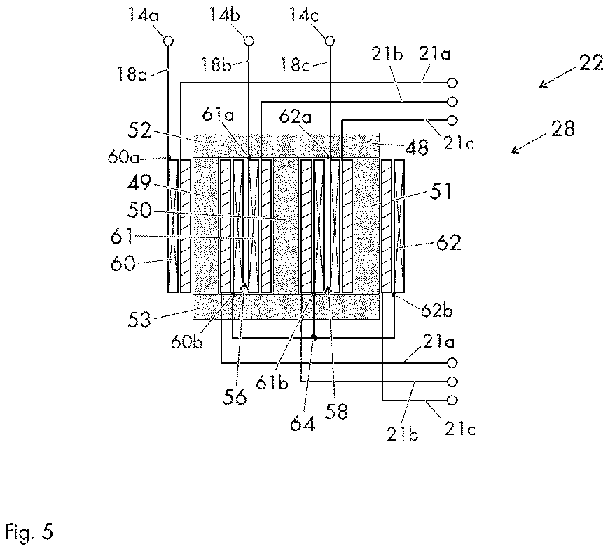

Die Transformatoreinrichtung 22 weist drei Transformator-Untereinheiten 28, 29, 30 auf, die jeweils einem Wechselrichter zugeordnet sind. Für jeden der drei Phasenausgänge 14a bis 16c des zugeordneten Wechselrichters ist genau eine Primärwicklung (nicht dargestellt) von der Transformator-Untereinheit umfasst, deren Primärwicklungsanfang (nicht dargestellt) über eine spezielle elektrische Verbindung 18a bis 20c mit dem zugehörigen Phasenausgang elektrisch verbunden ist und frei ist von Drosselspulen. Die Phasenausgänge 14a bis 16c der Wechselrichter sind somit alle über genau eine spezielle elektrische Verbindung mit einem Primärwicklungsanfang (nicht dargestellt) einer dem Phasenausgang zugeordneten Primärwicklung (nicht dargestellt) der Transformatoreinrichtung 22 verbunden und die Transformatoreinrichtung 22 weist entsprechend der Anzahl der Phasenausgänge neun Primärwicklungen auf. Die Primärwicklungsenden (nicht dargestellt- siehe Figur 5) der Primärwicklungen (nicht dargestellt- siehe Figur 5) einer jeden Transformator-Untereinheit 28, 29, 30 sind in einem Sternpunkt (nicht dargestellt - siehe Figur 5) zusammengefasst. Je Phase umfasst die Transformatoreinrichtung 22 genau eine Sekundärwicklung 21a, 21b und 21c. Die Sekundärwicklungsenden der drei Sekundärwicklungen 21a, 21b und 21c sind in einem gemeinsamen Sternpunkt 24 zusammengefasst. Jede der Sekundärwicklungen 21a, 21b und 21c verläuft durch alle drei Transformator-Untereinheiten 28, 29 und 30 und ist entsprechend ihrer Phase mit den in den Transformator-Untereinheit 28, 29, 30 angeordneten Primärwicklungen dieser Phase induktiv gekoppelt. Beispielsweise ist die Sekundärwicklung 21a mit den drei Primärwicklungen induktiv gekoppelt, deren Primärwicklungsanfänge mit den Phasenausgängen 14a, 15a, 16a verbunden sind.

Die Phasen A, B, C weisen zueinander eine Phasenverschiebung von 120 Grad auf, so dass die Summe dieser Phasenverschiebung 360 Grad entspricht. Um eine Dämpfung der Ausgangsspannungen der Wechselrichter 14, 15 und 16 zusätzlich zur erhöhen, umfasst die leistungselektronische Vorrichtung 13 eine Steuereinrichtung 17. Die Steuereinrichtung 17 steht mit den Wechselrichter 14, 15 und 16 über Steuerleitungen 25 in Verbindung und ist dazu ausgebildet und eingerichtet, im Betrieb der leistungselektronischen Vorrichtung 13 mindestens zeitweise die Taktung der Halbbrücken der Wechselrichter 14, 15, 16 zueinander derart zu verschieben, dass für jede Phase A, B und C die Summe der am Primärwicklungsanfang der zu dieser Phase gehörigen Primärwicklungen anliegenden Spannungen einem Spannungsverlauf mit einer höheren Taktfrequenz entspricht, als die Taktfrequenzen der Spannungsverläufe der an diesen Primärwicklungen anliegenden Einzelspannungen. Hierzu kann die Steuereinrichtung 17 beispielsweise entsprechende Steuersignale an eine Steuerung (nicht dargestellt) der Wechselrichter 14, 15, 16 übermitteln. Durch die in dieser Weise verschobene Taktung der Wechselrichter 14, 15, 16 untereinander werden in den Sekundärwicklungen 21a, 21b, 21c sinusförmige Spannungen mit besonders hochfrequenten Anteilen induziert. Da die dämpfende Wirkung der Sekundärwicklungen 21a, 21b, 21c mit der Frequenz ansteigt, ist mittels der leistungselektronischen Vorrichtung 13 eine besonders gute Dämpfung der hochfrequenten Anteile im Ausgangsstrom der leistungselektronischen Vorrichtung 13 ermöglicht.

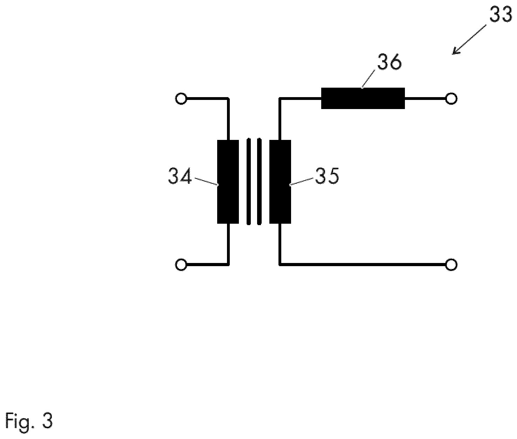

Die Figur 3 zeigt ein vereinfachtes Ersatzschaltbild eines einphasigen Transformators 33 gemäß dem Stand der Technik. Der Transformator 33 weist eine Primärwicklung 34, eine Sekundärwicklung 35 und eine Streuinduktivität 36 auf.

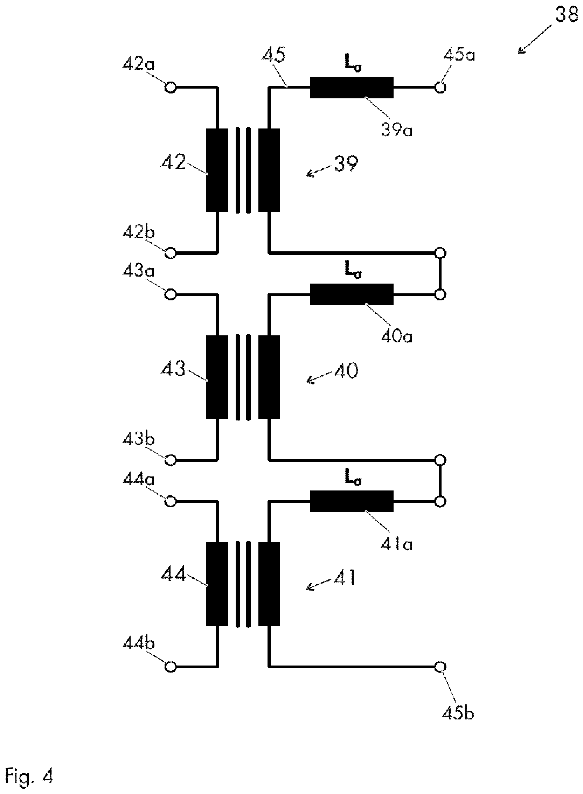

Die Figur 4 zeigt ein Ersatzschaltbild einer einphasigen Transformatoreinrichtung 38 gemäß einem zweiten Ausführungsbeispiel der Erfindung. Die Transformatoreinrichtung 38 umfasst drei Transformator-Untereinheiten 39, 40 und 41, die jeweils eine Primärwicklung 42, 43, 44 aufweisen. Die Primärwicklungen 42, 43, 44 erstrecken sich jeweils von einem Primärwicklungsanfang 42a, 43a, 44a zu einem Primärwicklungsende 42b, 43b, 44b und sind alle mit einer gemeinsamen Sekundärwicklung 45 induktiv gekoppelt, die sich über die drei Transformator-Untereinheiten 39, 40 und 41 erstreckt und einen Sekundärwicklungsanfang 45a und ein Sekundärwicklungsende 45b aufweist. Die Streuinduktivität und damit die dämpfenden Eigenschaften der Transformatoreinrichtung 38 sind in dem Ersatzschaltbild durch eine Reihenschaltung der Streuinduktivitäten 39a, 40a, 41a der Transformator-Untereinheiten 39, 40, 41 wiedergegeben.

Figur 5 zeigt einen Ausschnitt der in Figur 2 dargestellten Transformatoreinrichtung 22 im Bereich der Transformator-Untereinheit 28 in einer Schnittansicht und in einer schematisierten Darstellung. Es ist ein Abschnitt der Kernanordnung 48 der Transformatoreinrichtung 22 dargestellt, der aus einer Zeile von zueinander benachbart angeordneten Kemschenkeln 49, 50, 51 und zwei Jochverbindungen 52, 53 zusammengefügt ist. Die Jochverbindungen 52, 53 verbinden die Kernschenkel 49, 50, 51 miteinander. Die Kernanordnung 48 weist in dem dargestellten Ausschnitt zwei Kernfenster 56, 58 auf und ist in Kernanordnung von drei Primärwicklungen 60, 61, 62 umwickelt, wobei die Primärwicklung 60 um den an das Kernfenster 56 angrenzenden Kernschenkel 49, die Primärwicklung 61 um den an die Kernfenster 56 und 58 angrenzenden Kernschenkel 50 und die Primärwicklung 62 um den an das Kernfenster 58 angrenzenden Kernschenkel 51 gewickelt ist. Die drei Kernschenkel 49, 50, 51 sind auch jeweils von einem Abschnitt der Sekundärwicklung 21a, 21b und 21c umwickelt. Die Abschnitte der Sekundärwicklungen 21a, 21b und 21c sind bei dem dargestellten Beispiel um die Primärwicklungen 60, 61, 62 herum gewickelt. Die Abschnitte der Sekundärwicklungen könnten aber auch alternativ von den Primärwicklungen umwickelt sein oder mit diesen in abwechselnden Schichten auf den jeweiligen Kernschenkel angeordnet werden. Die Primärwicklungen 60, 61, 62 umfassen Primärwicklungsanfänge 60a, 61a und 62a, die entsprechend ihrer Phasenzugehörigkeit über die speziellen elektrischen Verbindungen 18a, 18b, 18c mit den zugehörigen Phasenausgänge 14a, 14b und 14c des Wechselrichters 14 (nicht dargestellt) verbunden sind. Die Primärwicklungen 60, 61, 62 umfassen auch Primärwicklungsenden 60b, 61b, 62b, die in einem Sternpunkt 64 miteinander verbunden sind.

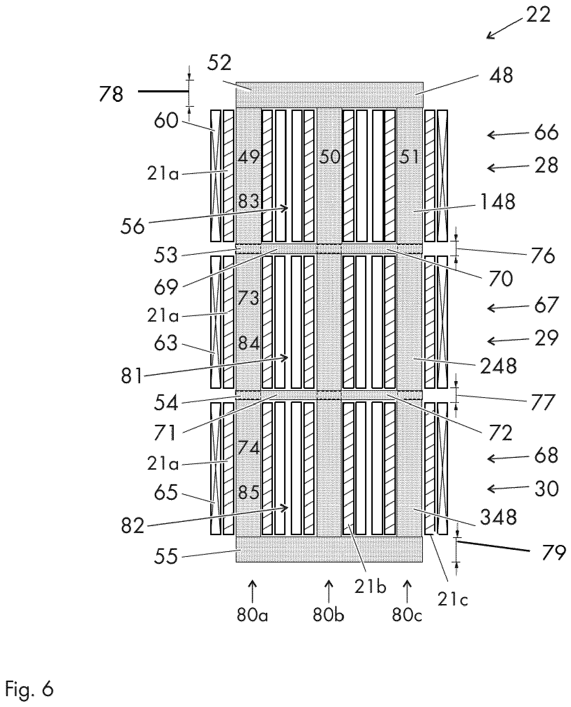

Die Figur 6 zeigt die in der Figur 2 dargestellte Transformatoreinrichtung 22 in einer Schnittansicht und in schematischer Darstellung. Im Vergleich zur Figur 5 ist nicht nur ein Ausschnitt der Transformatoreinrichtung 22 dargestellt, allerdings wurden zur besseren Übersicht Details zu den Anschlüssen der Wicklungen in der Figur weggelassen.

Die Kernanordnung 48 umfasst drei Zeilen 66, 67, 68 von zueinander benachbart angeordneten Kernschenkeln, die je Zeile über Jochverbindungen miteinander verbunden sind. In der Zeile 66 sind die Kernschenkel 49, 50 und 51 zueinander benachbart angeordnet und über die Jochverbindungen 52 und 53 miteinander verbunden. Die restlichen Kernschenkel und Jochverbindungen sind, sofern nicht notwendig, der Übersicht halber nicht mit eigenen Bezugszeichen bezeichnet.

Der Aufbau der Kernanordnung 48 entspricht einem Stapel aus drei dreiphasigen Transformatorkernen 148, 248, 348, welche in Kernausführung ausgebildet sind, wobei die Transformatorkerne 148, 248, 348 in Richtung der Kernschenkel aneinandergereiht angeordnet sind mit einander zugewandten Jochverbindungen, die gemeinsam ausgebildet sind. Die Jochverbindung 53 ist beispielsweise sowohl von den Transformatorkernen 148 und 248 umfasst und die Jochverbindung 54 von den Transformatorkernen 248 und 348. Die zwischen den Kernschenkeln der Zeilen 66 und 67 angeordnete Jochverbindung 53 und die zwischen den Kernschenkeln der Zeilen 67 und 68 angeordnete Jochverbindung 54 umfasst zur Ausbildung von Streukanälen für Querflüsse jeweils zwei Einlagen 69, 70 bzw. 71, 72 aus ferromagnetischem Material. Die gestrichelt eingezeichneten Bereiche der Jochverbindungen 53 und 54 sind jeweils einstückig mit benachbarten Kernschenkeln ausgebildet. Im Rahmen dieser Erfindung ist das Merkmal "Zeilen von zueinander benachbart angeordneten Kernschenkeln, die je Zeile über Jochverbindungen miteinander verbunden sind" somit keine Aussage hinsichtlich einer einstückigen oder mehrstückigen Ausbildung der Bestandteile der Kernanordnung und/oder einer getrennten und zusammengefügten Ausbildung der Kernschenkel und Jochverbindungen. Bei dem gezeigten Ausführungsbeispiel der Figur sind beispielsweise die Stirnseiten der Kernschenkel teilweise nur theoretische Trennlinien zwischen Kernschenkel und Jochverbindung. Beispielsweise sind die Kernschenkel 49, 73 und 74 mit den zwischen diesen Kernschenkeln sich erstreckenden gestrichelt eingezeichneten Abschnitten der Jochverbindungen 53 und 54 einstückig ausgebildet.

Die Jochverbindungen 53 und 54 weisen eine parallel zu den Kernschenkeln weisende Dicke 76, 77 auf, welche geringer ist als die Dicke 78, 79 der die Kernanordnung 48 abschließenden Jochverbindungen 52 und 55.

Die Anzahl der Zeilen 66, 67, 68 entspricht hierbei der Anzahl der in Figur 2 dargestellten Anzahl der Wechselrichter (nicht dargestellt - siehe Figur 2), wobei jede Zeile 66, 67, 68 genau einem der Wechselrichter (nicht dargestellt - siehe Figur 2) zugeordnet ist und jede der drei Phasenausgänge des Wechselrichters mit genau einer der drei Primärwicklungen der zugeordneten Zeile 66, 67, 68 elektrisch verbunden ist. Entlang einer Spalte 80a, 80b, 80c der Transformatoreinrichtung 22 sind Primärwicklungen angeordnet, die der gleichen Phase zugeordneten sind, wobei sich die zu dieser Phase zugehörige Sekundärwicklung 21a, 21b, 21c entlang der entsprechenden Spalte 80a, 80b, 80c erstreckt und abschnittweise um die von den Primärwicklungen umwickelten Kernschenkel der entsprechenden Spalte 80a, 80b, 80c gewickelt ist. Beispielsweise bilden die Kernschenkel 49, 73, 74 der Spalte 80a Kernabschnitte 83, 84, 85 aus, um die die Sekundärwicklung 21a abschnittsweise gewickelt ist. Die Kernabschnitte 83, 84, 85 grenzen an die Kernfenster 56, 81, 82 an, wobei die Kernabschnitte 83, 84, 85 jeweils von den beiden anderen Kernfenstern beabstandet sind und von den Primärwicklungen 60, 63 und 65 umwickelt sind. Die Primärwicklungen der Transformatoreinrichtung 22 werden im Betrieb mit Ausgangsspannungen der Wechseltrichter beaufschlagt, wobei die entlang einer Zeile angeordneten Primärwicklungen mit Ausgangsspannungen beaufschlagt werden, die eine Phasenverschiebung von 120 Grad gegeneinander aufweisen und die entlang einer Spalte 80a, 80b, 80c angeordneten Primärwicklungen zur Erhöhung einer dämpfenden Wirkung mit Ausgangsspannungen beaufschlagt werden, deren Spannungsverläufe zumindest zeitweise zueinander verschobene Pulse im Spannungsverlauf aufweisen - also zeitlich verschobene Flanken der Pulse durch eine zeitversetzte (verschobene) Taktung der Halbbrücken aufweisen können, die derart ist, dass die Summe der am Primärwicklungsanfang der Primärwicklungen einer Spalte 80a, 80b, 80c anliegenden Spannungen einem Spannungsverlauf einer höheren Taktfrequenz entspricht, als die Taktfrequenzen der Spannungsverläufe der Einzelspannungen. Durch die erfindungsgemäße Anbindung der Wechselrichter (nicht dargestellt - siehe Figur 2) an die Transformatoreinrichtung 22 bilden sich zwischen den Wechselrichtern, trotz fehlender Drosselspulen in den speziellen elektrischen Verbindungen (nicht dargestellt - siehe Figur 2 und 5), keine störenden Kreisströme zwischen den Wechselrichtern aus, auch nicht bei zueinander verschobener Taktung der den Phasenausgängen vorgeschalteten Halbbrücken (nicht dargestellt - siehe Figur 2 und 5) gleicher Phase.

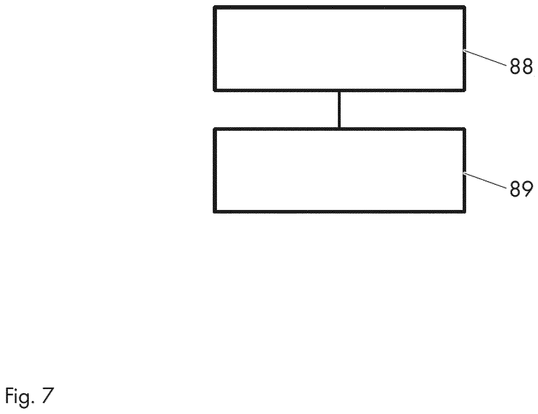

Die Figur 7 zeigt ein Ablaufdiagramm eines Verfahrens gemäß einem dritten Ausführungsbeispiel der Erfindung. Das Verfahren dient der Dämpfung von hochfrequenten Anteilen im Ausgangsstrom einer leistungselektronischen Vorrichtung. Das Verfahren wird in einem ersten Verfahrensschritt 88 mit einer leistungselektronischen Vorrichtung durchgeführt, welche eine Wechselrichteranordnung und eine Transformatoreinrichtung umfasst und die Wechselrichteranordnung primärseitig mit der Transformatoreinrichtung elektrisch verbunden ist und in der Transformatoreinrichtung mindestens für eine erste Phase mindestens zwei Primärwicklungen induktiv mit einer gemeinsamen Sekundärwicklung gekoppelt sind. In einem zweiten Verfahrensschritt 89 werden im Betrieb der leistungselektronischen Vorrichtung zumindest zeitweise mindestens die zwei Primärwicklungen mit unterschiedlichen Ausgangsspannungen der Wechselrichteranordnung beaufschlagt, indem die Wechselrichteranordnung bezüglich der beiden Ausgangsspannungen mit zueinander verschobenen Taktflanken getaktet/geschaltet wird, so dass die Summe der beiden Ausgangsspannungen einem Spannungsverlauf mit einer höheren Taktfrequenz entspricht, als die Taktfrequenz der Spannungsverläufe der einzelnen Ausgangsspannungen.

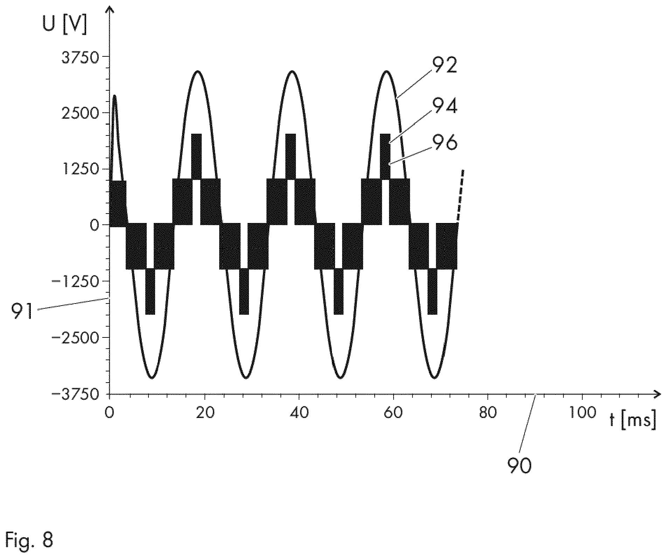

Die Figur 8 zeigt ein Diagramm, auf dessen x-Achse 90 die Zeit t [ms] aufgetragen ist und auf dessen y-Achse 91 eine Spannung in Spannungseinheiten aufgetragen ist. Der Spannungsverlauf 92 und 94 soll der Verdeutlichung des in Figur 7 gezeigten Verfahrens dienen. Der Spannungsverlauf 92 entspricht einem Spannungsverlauf, der über der mit den mindestens zwei Primärwicklungen induktiv gekoppelten Sekundärwicklung abfällt. Der Spannungsverlauf 94 entspricht der Summe der an den mindestens zwei Primärwicklungen anliegenden Ausgangsspannungen, die zueinander verschobene Pulse im Spannungsverlauf aufweisen. Die Verschiebung der Pulse im Spannungsverlauf führt zu einer Verdichtung der bei der Pulsweitenmodulation entstehenden Rechteck-Spannungsverläufe, so dass die Summe der Ausgangsspannungen 96 einem Spannungsverlauf mit einer höheren Taktfrequenz entspricht, als die Taktfrequenzen der Spannungsverläufe der Einzelspannungen. Die Taktfrequenz des Spannungsverlaufs 94 ist hierbei so hoch, dass in der gewählten Darstellung die Rechteck-Spannungsverläufe als mosaikartig zusammengesetzte Flächen erscheinen. Bei höherer Auflösung würde sich jedes Rechteck des Mosaiks als hochfrequenter Rechteck-Spannungsverlauf darstellen.

### Bezugszeichenliste

- 1: Wechselrichter
- 1a, 1b, 1c: Phasenausgang
- 2: Wechselrichter
- 3: Wechselrichter
- 4: Leistungselektronische Vorrichtung
- 5: Transformator
- 6: Stromverteilungsnetz
- 7: Pluspol
- 8: Minuspol
- 9a, 9b, 9c: Sinusfilterdrossel
- 10a, 10b, 10c: Sinusfilterdrossel
- 11a, 11b, 11c: Elektrische Verbindung
- 12: Dreieckschaltung
- 13: Leistungselektronische Vorrichtung
- 14: Wechselrichter
- 14a, 14b, 14c: Phasenausgang
- 15: Wechselrichter
- 15a, 15b, 15c: Phasenausgang
- 16: Wechselrichter
- 16a, 16b, 16c: Phasenausgang
- 17: Steuereinrichtung
- 18a, 18b, 18c: Spezielle elektrische Verbindung
- 19a, 19b, 19c: Spezielle elektrische Verbindung
- 20a, 20b, 20c: Spezielle elektrische Verbindung
- 21a, 21b, 21c: Sekundärwicklung
- 22: Transformatoreinrichtung
- 22a, 22b, 22c: Phasenanschluss
- 23: Wechselrichteranordnung
- 24: Sternpunkt
- 25: Steuerleitung
- 26: Dreieckschaltung
- 27a, 27b, 27c: Leitung
- 28, 29, 30: Transformator-Untereinheit
- 33: Transformator
- 34: Primärwicklung
- 35: Sekundärwicklung
- 36: Streuinduktivität
- 38: Transformatoreinrichtung
- 39, 40, 41: Transformator-Untereinheit
- 39a, 40a, 41a: Streuinduktivität
- 42, 43, 44: Primärwicklung
- 42a, 43a, 44a: Primärwicklungsanfang
- 42b, 43b, 44b: Primärwicklungsende
- 45: Sekundärwicklung
- 45a: Sekundärwicklungsanfang
- 45b: Sekundärwicklungsende
- 48: Kernanordnung
- 49, 50, 51: Kernschenkel
- 52, 53, 54, 55: Jochverbindung
- 56, 58: Kernfenster
- 60, 61, 62, 63,: Primärwicklung
- 65 60a, 61a, 62a: Primärwicklungsanfang
- 60b, 61b, 62b: Primärwicklungsende
- 64: Sternpunkt
- 66, 67, 68: Zeile
- 69, 70, 71, 72: Einlage
- 73, 74: Kernschenkel
- 76, 77, 78, 79: Dicke
- 80a, 80b, 80c: Spalte
- 81, 82: Kernfenster
- 83, 84, 85: Kernabschnitte
- 88: Verfahrensschritt
- 89: Verfahrensschritt
- 90: x-Achse
- 91: y-Achse
- 92: Spannungsverlauf
- 94: Spannungsverlauf
- 96: Summe der Ausgangsspannungen
- 148, 248, 348: Transformatorkern
- A: Phase
- B: Phase
- C: Phase

## Patentansprüche

1. Leistungselektronische Vorrichtung (13) mit mindestens zwei Wechselrichtern (14, 15, 16) und einer Transformatoreinrichtung (22, 38), wobei
- die Wechselrichter (14, 15, 16) AC-seitig mit der Transformatoreinrichtung (22, 38) primärseitig elektrisch verbunden sind und die Transformatoreinrichtung (22, 38) sekundärseitig mit einem Stromverteilungsnetzes (6) elektrisch verbindbar ist,
- die Transformatoreinrichtung (22, 38) eine Kernanordnung (48) und mindestens eine Primärwicklung (42, 43, 44, 60, 61, 62) und mindestens eine Sekundärwicklung (21a, 21b, 21c, 45) umfasst, welche die Kernanordnung (48) zumindest abschnittweise umwickeln,
- die Kernanordnung (48) mindestens zwei Zeilen (66, 67, 68) von zueinander benachbart angeordneten Kernschenkeln (49, 50, 51) umfasst, wobei die Kernschenkel je Zeile (66, 67, 68) über Jochverbindungen (52, 53, 54, 55) miteinander verbunden sind, wobei
- mindestens eine elektrische Verbindung (18a - 18c, 19a - 19c, 20a -20c) zwischen einem Phasenausgang (14a - 14c, 15a - 15c, 16a - 16c) eines Wechselrichters und einem Primärwicklungsanfang (60a, 61a, 62a) der mindestens einen Primärwicklung (60, 61, 62) der Transformatoreinrichtung (22, 38) vorhanden ist, wobei für eine derartige elektrische Verbindung gilt, dass
der Primärwicklungsanfang (60a) der mindestens einen Primärwicklung (60) mit genau einem Phasenausgang (14a) eines der Wechselrichter (14) elektrisch verbunden ist, und die mindestens eine Primärwicklung (60)um einen an ein erstes Kernfenster (56) angrenzenden Kernabschnitt (83) einer Zeile (66) gewickelt ist,
und mindestens eine zweite, mit mindestens einem der Wechselrichter elektrisch verbundene Primärwicklung (63, 65) derselben Phase um einen an ein zweites Kernfenster (81, 82) einer anderen Zeile (67, 68) angrenzenden Kernabschnitt (84, 85) gewickelt ist, welcher von dem ersten Kernfenster (56) beabstandet ist, wobei eine Sekundärwicklung (21a) derselben Phase abschnittsweise um einen an das erste Kernfenster (56) angrenzenden Kernabschnitt (83) und um einen an das zweite Kernfenster (81, 82) angrenzenden Kernabschnitt (84, 85) gewickelt ist, wobei die Transformatoreinrichtung (22, 38) sekundärseitig mindestens zwei Phasenanschlüsse (22a, 22b, 22c) umfasst, welche jeweils zum Anschluss einer Leitung (27a, 27b, 27c) eines Stromverteilungsnetzes (6) ausgebildet sind, **dadurch gekennzeichnet, dass** die Phasenanschlüsse (22a, 22b, 22c) der Transformatoreinrichtung (22, 38) mittels einer Sternschaltung von Kondensatoren oder einer Eckschaltung von Kondensatoren elektrisch miteinander verbunden sind.

2. Leistungselektronische Vorrichtung (13) nach Anspruch 1, wobei die Sekundärwicklung (21a) derselben Phase abschnittsweise um einen an das erste Kernfenster (56) angrenzenden Kernabschnitt (83) und um einen an das zweite Kernfenster (81, 82) angrenzenden Kernabschnitt (84, 85) gewickelt ist, wobei die Kernabschnitte (84, 85) von dem jeweils anderen Kernfenster (56) beabstandet sind.

3. Leistungselektronische Vorrichtung (13) nach einem der Ansprüche 1 oder 2, wobei für die elektrische Verbindung (18a - 18c, 19a - 19c, 20a - 20c) gilt, dass die Kernabschnitte (83, 84, 85), um die die mit ihrem Primärwicklungsanfang (60a) an die elektrische Verbindung angeschlossene Primärwicklung (60) und die mindestens zweite Primärwicklung (63, 65) und die Sekundärwicklung (21a) gewickelt sind, Kernschenkel (49, 73, 74) sind.

4. Leistungselektronische Vorrichtung (13) nach einem der Ansprüche 1 bis 3, wobei die elektrische Verbindung (18a - 18c, 19a - 19c, 20a - 20c) frei von Spulen, insbesondere von Drosselspulen, ist.

5. Leistungselektronische Vorrichtung (13) nach einem der Ansprüche 1 bis 4, wobei der mindestens eine Phasenausgang (14a - 14c, 15a - 15c, 16a - 16c) der mindestens zwei Wechselrichter (14, 15, 16) über eine elektrische Verbindung (18a - 18c, 19a - 19c, 20a - 20c) primärseitig mit der Transformatoreinrichtung (22, 38) verbunden ist.

6. Leistungselektronische Vorrichtung (13) nach einem der Ansprüche 1 bis 5, wobei die Transformatoreinrichtung (22, 38) je Phase weniger Sekundärwicklungen (21a, 21b, 21c) als Wechselrichter (14, 15, 16) umfasst, insbesondere je Phase (A, B, C) genau eine Sekundärwicklung (21a, 21b, 21c).

7. Leistungselektronische Vorrichtung (13) nach einem der Ansprüche 1 bis 6, wobei die mindestens zwei Wechselrichter derart eingerichtet und ausgebildet sind, dass im Betrieb die Phasen (A, B, C) eines jeden Wechselrichters (14, 15, 16) gegeneinander eine Phasenverschiebung aufweisen, so dass die Summe der Phasenverschiebungen 360 Grad entspricht, und die Primärwicklungsenden (60b, 61b, 62b) der mit einem Wechselrichter (14) elektrisch verbundenen Primärwicklungen (60, 61, 62) elektrisch miteinander verbunden sind, insbesondere in einem Sternpunkt (64) oder einer Dreieckschaltung (12, 26).

8. Leistungselektronische Vorrichtung (13) nach einem der Ansprüche 1 bis 7, wobei die mindestens zwei Wechselrichter (14, 15, 16) dreiphasige Wechselrichter sind.

9. Leistungselektronische Vorrichtung (13) nach einem der Ansprüche 1 bis 8, wobei die Sekundärwicklungsenden (45b) elektrisch miteinander verbunden sind, insbesondere in einem Sternpunkt (24).

10. Leistungselektronische Vorrichtung (13) nach einem der Ansprüche 1 bis 9, wobei die Kernanordnung (48) einen Stapel von einphasigen oder mehrphasigen Transformatorkernen (148, 248, 348) umfasst, welche in Kern- oder Mantelausführung ausgebildet sind, wobei die Transformatorkerne (148, 248, 348) in Richtung der Kernschenkel (49, 50, 51, 73, 74) aneinandergereiht angeordnet sind mit einander zugewandten Jochverbindungen (53, 54), und die benachbarten Jochverbindungen (52, 53) gemeinsam ausgebildet sind und/oder aneinander anliegend und/oder parallel und voneinander beabstandet angeordnet sind.

11. Leistungselektronische Vorrichtung (13) nach einem der Ansprüche 1 bis 10, wobei mindestens eine zwischen Kernschenkeln (49, 50, 51, 73, 74) zweier benachbarter Zeilen (66, 67, 68) angeordnete Jochverbindung (53, 54) zur Ausbildung eines Streukanals für Querflüsse eine Einlage (69, 70, 71, 72) aus ferromagnetischem Material umfasst oder aus ferromagnetischem Material besteht.

12. Leistungselektronische Vorrichtung (13) nach einem der Ansprüche 1 bis 11, wobei mindestens eine zwischen Kernschenkeln (49, 50, 51, 73, 74) zweier benachbarter Zeilen (66, 67, 68) angeordnete Jochverbindung (53, 54) eine parallel zu den Kernschenkeln weisende Dicke (76, 77) aufweist, welche gleich oder geringer ist als die Dicke (78, 79) der die Kernanordnung (48) abschließenden Jochverbindungen (52, 55).

13. Leistungselektronische Vorrichtung (13) nach einem der Ansprüche 1 bis 12, wobei die Anzahl der Zeilen (66, 67, 68) der Anzahl der Wechselrichter (14, 15, 16) entspricht, wobei jede Zeile (66) eine der Phasenanzahl entsprechende Anzahl an Primärwicklungen (60, 61, 62) umfasst und diese über eine spezielle elektrische Verbindung (18a - 18c) mit einem entsprechenden Phasenausgang (14a - 14c) eines gemeinsamen Wechselrichters (14) verbunden sind.

14. Leistungselektronische Vorrichtung (13) nach einem der Ansprüche 1 bis 13, wobei eine Steuereinrichtung (17) umfasst ist, welche derart ausgebildet und eingerichtet ist, dass im Betrieb der leistungselektronischen Vorrichtung (13) mindestens zeitweise die Taktung der Wechselrichter (14, 15, 16) zueinander derart verschoben ist, dass für mindestens eine spezielle elektrische Verbindung (18a) die Summe der am Primärwicklungsanfang (60a) der Primärwicklung (60) anliegenden Spannung und der an der mindestens zweiten Primärwicklung (63, 65) zur selben Sekundärwicklung (21a) anliegenden Spannung einem Spannungsverlauf mit einer höheren Taktfrequenz entspricht, als die Taktfrequenzen der Spannungsverläufe der Einzelspannungen.

15. Verfahren zur Dämpfung von hochfrequenten Anteilen im Ausgangsstrom einer leistungselektronischen Vorrichtung (13) mit einer Wechselrichteranordnung (23) und einer Transformatoreinrichtung (22, 38), wobei die Wechselrichteranordnung (23) primärseitig mit der Transformatoreinrichtung (22, 38) elektrisch verbunden ist, wobei die Transformatoreinrichtung (22, 38) sekundärseitig mindestens zwei Phasenanschlüsse (22a, 22b, 22c) umfasst, welche jeweils zum Anschluss einer Leitung (27a, 27b, 27c) eines Stromverteilungsnetzes (6) ausgebildet sind, und wobei die Phasenanschlüsse (22a, 22b, 22c) der Transformatoreinrichtung (22, 38) mittels einer Sternschaltung von Kondensatoren oder einer Eckschaltung von Kondensatoren elektrisch miteinander verbunden sind, wobei in der Transformatoreinrichtung (22, 38) mindestens für eine erste Phase (A, B, C) mindestens zwei Primärwicklungen (60, 63, 65) induktiv mit einer gemeinsamen Sekundärwicklung (21a) gekoppelt sind, wobei im Betrieb der leistungselektronischen Vorrichtung (13) mindestens zeitweise mindestens die zwei Primärwicklungen (60, 63, 65) mit Ausgangsspannungen zur gleichen Phase aber mit unterschiedlichem Spannungsverlauf von der Wechselrichteranordnung (23) beaufschlagt werden, indem die Wechselrichteranordnung (23) bezüglich der beiden Ausgangsspannungen mit zeitlich zueinander verschobenen Taktflanken angesteuert wird, so dass die Summe der beiden Ausgangsspannungen einem Spannungsverlauf mit einer höheren Taktfrequenz entspricht, als die Taktfrequenzen der Spannungsverläufe der beiden einzelnen Ausgangsspannungen.

## Claims

1. A power electronics device (13) having at least two inverters (14, 15, 16) and a transformer apparatus (22, 38), wherein
- the inverters (14, 15, 16) are electrically connected on their AC side to a primary side of the transformer apparatus (22, 38), and the transformer apparatus (22, 38) is configured to be electrically connected on a secondary side thereof to a power distribution grid (6),
- the transformer apparatus (22, 38) comprises a core arrangement (48) and at least one primary winding (42, 43, 44, 60, 61, 62) and at least one secondary winding (21a, 21b, 21c, 45) that wind around the core arrangement (48) at least in sections,
- the core arrangement (48) comprises at least two rows (66, 67, 68) of core limbs (49, 50, 51) arranged adjacent to one another, wherein the core limbs are connected to one another via yoke connections (52, 53, 54, 55) in each row (66, 67, 68), wherein
- at least one electrical connection (18a - 18c, 19a - 19c, 20a - 20c) is present between a phase output (14a - 14c, 15a - 15c, 16a - 16c) of an inverter and a primary winding start (60a, 61a, 62a) of the at least one primary winding (60, 61, 62) of the transformer apparatus (22, 38), wherein the following applies to such an electrical connection:
the primary winding start (60a) of the primary winding (60) is electrically connected to exactly one phase output (14a) of one of the inverters (14) and the primary winding (60) is wound around a core section (83), adjoining a first core window (56), of a row (66), and at least one second primary winding (63, 65), electrically connected to at least one of the inverters, of the same phase is wound around a core section (84, 85) adjoining a second core window (81, 82) of another row (67, 68), which core section is spaced from the first core window (56), wherein a secondary winding (21a) of the same phase is wound in sections around a core section (83) adjoining the first core window (56) and around a core section (84, 85) adjoining the second core window (81, 82), wherein the transformer apparatus (22, 38) comprises at least two phase terminals (22a, 22b, 22c) on its secondary side, which phase terminals are each designed for the connection of a line (27a, 27b, 27c) of a power distribution grid (6), **characterized in that** the phase terminals (22a, 22b, 22c) of the transformer apparatus (22, 38) are electrically connected to one another by way of a star connection of capacitors or a polygon connection of capacitors.

2. The power electronics device (13) as claimed in claim 1, wherein the secondary winding (21a) of the same phase is wound in sections around a core section (83) adjoining the first core window (56) and around a core section (84, 85) adjoining the second core window (81, 82), wherein the core sections (84, 85) are spaced from the respective other core window (56).

3. The power electronics device (13) as claimed in either of claims 1 and 2, wherein it is the case for the electrical connection (18a - 18c, 19a - 19c, 20a - 20c) that the core sections (83, 84, 85) around which the primary winding (60), that is connected at its primary winding start (60a) to the electrical connection, and the at least second primary winding (63, 65) and the secondary winding (21a) are wound, are core limbs (49, 73, 74).

4. The power electronics device (13) as claimed in one of claims 1 to 3, wherein the electrical connection (18a - 18c, 19a - 19c, 20a - 20c) is free from coils, in particular from choke coils.

5. The power electronics device (13) as claimed in one of claims 1 to 4, wherein the at least one phase output (14a - 14c, 15a - 15c, 16a - 16c) of the at least two inverters (14, 15, 16) is connected to the transformer apparatus (22, 38) on the primary side thereof via an electrical connection (18a - 18c, 19a - 19c, 20a - 20c).

6. The power electronics device (13) as claimed in one of claims 1 to 5, wherein the transformer apparatus (22, 38) comprises fewer secondary windings (21a, 21b, 21c) than inverters (14, 15, 16) per phase, in particular exactly one secondary winding (21a, 21b, 21c) per phase (A, B, C).

7. The power electronics device (13) as claimed in one of claims 1 to 6, wherein the at least two inverters are configured and designed such that, during operation, the phases (A, B, C) of each inverter (14, 15, 16) comprise a phase shift with respect to one another, such that the sum of the phase shifts corresponds to 360 degrees, and the primary winding ends (60b, 61b, 62b) of the primary windings (60, 61, 62) electrically connected to an inverter (14) are electrically connected to one another, in particular at a star point (64) or in a delta connection (12, 26).

8. The power electronics device (13) as claimed in one of claims 1 to 7, wherein the at least two inverters (14, 15, 16) are three-phase inverters.

9. The power electronics device (13) as claimed in one of claims 1 to 8, wherein the secondary winding ends (45b) are electrically connected to one another, in particular at a star point (24).

10. The power electronics device (13) as claimed in one of claims 1 to 9, wherein the core arrangement (48) comprises a stack of single-phase or multiphase transformer cores (148, 248, 348) that are formed in a core or jacket design, wherein the transformer cores (148, 248, 348) are arranged in a row in the direction of the core limbs (49, 50, 51, 73, 74) with yoke connections (53, 54) facing one another, and the adjacent yoke connections (52, 53) are formed together and/or are arranged adjacent to one another and/or are parallel and spaced from one another.

11. The power electronics device (13) as claimed in one of claims 1 to 10, wherein at least one yoke connection (53, 54), arranged between core limbs (49, 50, 51, 73, 74) of two adjacent rows (66, 67, 68) comprises an insert (69, 70, 71, 72) made from ferromagnetic material or consists of ferromagnetic material for forming a leakage channel for transverse fluxes.

12. The power electronics device (13) as claimed in one of claims 1 to 11, wherein at least one yoke connection (53, 54), arranged between core limbs (49, 50, 51, 73, 74) of two adjacent rows (66, 67, 68), has a thickness (76, 77) pointing parallel to the core limbs that is equal to or less than the thickness (78, 79) of the yoke connections (52, 55) terminating the core arrangement (48).

13. The power electronics device (13) as claimed in one of claims 1 to 12, wherein the number of rows (66, 67, 68) corresponds to the number of inverters (14, 15, 16), wherein each row (66) comprises a number of primary windings (60, 61, 62) corresponding to the number of phases, and these primary windings are connected to a corresponding phase output (14a - 14c) of a common inverter (14) via a special electrical connection (18a - 18c).

14. The power electronics device (13) as claimed in one of claims 1 to 13, wherein a controller (17) is included, which is designed and configured such that, during operation of the power electronics device (13), the clocking of the inverters (14, 15, 16) is at least temporarily shifted with respect to one another such that, for at least one special electrical connection (18a), the sum of the voltage present at the primary winding start (60a) of the primary winding (60) and the voltage present at the at least second primary winding (63, 65) to the same secondary winding (21a) corresponds to a voltage profile with a higher clock frequency than the clock frequencies of the voltage profiles of the individual voltages.

15. A method for damping high-frequency components in the output current of a power electronics device (13) having an inverter arrangement (23) and a transformer apparatus (22, 38), wherein the inverter arrangement (23) is electrically connected to a primary side of the transformer apparatus (22, 38), wherein the transformer apparatus (22, 38) comprises at least two phase terminals (22a, 22b, 22c) on its secondary side, which phase terminals are each designed for the connection of a line (27a, 27b, 27c) of a power distribution grid (6), and wherein the phase terminals (22a, 22b, 22c) of the transformer apparatus (22, 38) are electrically connected to one another by way of a star connection of capacitors or a polygon connection of capacitors, wherein at least two primary windings (60, 63, 65) are inductively coupled to a common secondary winding (21a) in the transformer apparatus (22, 38) at least for a first phase (A, B, C), wherein, during operation of the power electronics device (13), output voltages of the same phase but with a different voltage profile are at least temporarily applied to the at least two primary windings (60, 63, 65) by the inverter arrangement (23), by virtue of the inverter arrangement (23) being driven with respect to the two output voltages with clock edges that are time-shifted with respect to one another, such that the sum of the two output voltages corresponds to a voltage profile with a higher clock frequency than the clock frequencies of the voltage profiles of the two individual output voltages.

## Revendications

1. Dispositif électronique de puissance (13) comprenant au moins deux onduleurs (14, 15, 16) et un dispositif transformateur (22, 38), dans lequel
- les onduleurs (14, 15, 16) sont reliés électriquement côté AC au dispositif transformateur (22, 38) côté primaire et le dispositif transformateur (22, 38) peut être relié électriquement côté secondaire à un réseau de distribution de courant (6),
- le dispositif transformateur (22, 38) comprend un agencement de noyau (48) et au moins un enroulement primaire (42, 43, 44, 60, 61, 62) et au moins un enroulement secondaire (21a, 21b, 21c, 45) qui entourent l'agencement de noyau (48) au moins par sections,
- l'agencement de noyau (48) comprend au moins deux lignes (66, 67, 68) de branches de noyau (49, 50, 51) disposées de manière adjacente les unes aux autres, les branches de noyau de chaque ligne (66, 67, 68) étant reliées entre elles par des liaisons à culasse (52, 53, 54, 55),
- au moins une connexion électrique (18a - 18c, 19a - 19c, 20a - 20c) est présente entre une sortie de phase (14a - 14c, 15a - 15c, 16a - 16c) d'un onduleur et un début d'enroulement primaire (60a, 61a, 62a) de l'au moins un enroulement primaire (60, 61, 62) du dispositif transformateur (22, 38), où, pour une telle connexion électrique, on a, en ce que le début (60a) de l'au moins un enroulement primaire (60) est relié électriquement à exactement une sortie de phase (14a) de l'un des onduleurs (14), et l'au moins un enroulement primaire (60) est enroulé autour d'une section de noyau (83) d'une ligne (66) adjacente à une première fenêtre de noyau (56), et au moins un deuxième enroulement primaire (63, 65) de la même phase, relié électriquement à au moins l'un des onduleurs, est enroulé autour d'une section de noyau (83) adjacente à une deuxième fenêtre de noyau (81, 82) d'une autre rangée (67, 68), qui est espacée de la première fenêtre de noyau (56), un enroulement secondaire (21a) de la même phase étant enroulé par sections autour d'une section de noyau (83) adjacente à la première fenêtre de noyau (56) et autour d'une section de noyau (84, 85) adjacente à la deuxième fenêtre de noyau (81, 82), le dispositif transformateur (22, 38) comprend du côté secondaire au moins deux raccordements de phase (22a, 22b, 22c) qui sont conçus chacun pour le raccordement d'une ligne (27a, 27b, 27c) d'un réseau de distribution de courant (6), **caractérisé en ce que** les raccordements de phase (22a, 22b, 22c) du dispositif de transformateur (22, 38) sont reliés électriquement entre eux au moyen d'une connexion étoile de condensateurs ou d'un montage en coin de condensateurs.

2. Dispositif électronique de puissance (13) selon la revendication 1, dans lequel l'enroulement secondaire (21a) de la même phase est enroulé par sections autour d'une section de noyau (83) adjacente à la première fenêtre de noyau (56) et autour d'une section de noyau (84, 85) adjacente à la deuxième fenêtre de noyau (81, 82), les sections de noyau (84, 85) étant espacées de l'autre fenêtre de noyau (56).

3. Dispositif électronique de puissance (13) selon l'une des revendications 1 ou 2, dans lequel, pour la connexion électrique (18a-18c, 19a-19c, 20a-20c), il est vrai que les sections de noyau (83, 84, 85) autour desquelles sont enroulés l'enroulement primaire (60) raccordé par son début d'enroulement primaire (60a) à la liaison électrique et l'au moins deuxième enroulement primaire (63, 65) et l'enroulement secondaire (21a) sont des branches de noyau (49, 73, 74).

4. Dispositif électronique de puissance (13) selon l'une des revendications 1 à 3, dans lequel la connexion électrique (18a-18c, 19a-19c, 20a-20c) est exempte de bobines, notamment de bobines d'arrêt.

5. Dispositif électronique de puissance (13) selon l'une des revendications 1 à 4, dans lequel l'au moins une sortie de phase (14a - 14c, 15a - 15c, 16a - 16c) des au moins deux onduleurs (14, 15, 16) est reliée côté primaire au dispositif transformateur (22, 38) par l'intermédiaire d'une connexion électrique (18a - 18c, 19a - 19c, 20a - 20c).

6. Dispositif électronique de puissance (13) selon l'une des revendications 1 à 5, dans lequel le dispositif transformateur (22, 38) comprend moins d'enroulements secondaires (21 a, 21 b, 21 c) par phase que d'onduleurs (14, 15, 16), notamment exactement un enroulement secondaire (21a, 21b, 21c) par phase (A, B, C).

7. Dispositif électronique de puissance (13) selon l'une des revendications 1 à 6, dans lequel les au moins deux onduleurs sont agencés et configurés de telle sorte qu'en fonctionnement, les phases (A, B, C) de chaque onduleur (14, 15, 16) présentent un déphasage entre elles, de sorte que la somme des déphasages correspond à 360 degrés, et les extrémités (60b, 61b, 62b) des enroulements primaires (60, 61, 62) reliés électriquement à un onduleur (14) sont reliées électriquement entre elles, notamment en un point neutre (64) ou en un couplage triangle (12, 26).

8. Dispositif électronique de puissance (13) selon l'une des revendications 1 à 7, dans lequel les au moins deux onduleurs (14, 15, 16) sont des onduleurs triphasés.

9. Dispositif d'électronique de puissance (13) selon l'une des revendications 1 à 8, dans lequel les extrémités des enroulements secondaires (45b) sont reliées électriquement entre elles, notamment en un point neutre (24).

10. Dispositif électronique de puissance (13) selon l'une des revendications 1 à 9, dans lequel l'ensemble de noyaux (48) comprend un empilement de noyaux de transformateurs (148, 248, 348) monophasés ou polyphasés, réalisés sous forme de noyaux ou de gaines, les noyaux de transformateurs (148, 248, 348) sont disposés les uns à côté des autres dans la direction des branches de noyau (49, 50, 51, 73, 74) avec des liaisons à culasse (53, 54) tournées les unes vers les autres, et les liaisons à culasse (52, 53) voisines sont réalisées en commun et/ou sont disposées en appui les unes contre les autres et/ou parallèlement et à distance les unes des autres.

11. Dispositif électronique de puissance (13) selon l'une des revendications 1 à 10, dans lequel au moins une liaison à culasse (53, 54) disposée entre des branches de noyau (49, 50, 51, 73, 74) de deux lignes voisines (66, 67, 68) comprend un insert (69, 70, 71, 72) en matériau ferromagnétique ou est constituée d'un matériau ferromagnétique pour former un canal de diffusion pour des flux transversaux.

12. Dispositif électronique de puissance (13) selon l'une des revendications 1 à 11, dans lequel au moins une liaison à culasse (53, 54) disposée entre des branches de noyau (49, 50, 51, 73, 74) de deux lignes voisines (66, 67, 68) présente une épaisseur (76, 77) orientée parallèlement aux branches de noyau, qui est égale ou inférieure à l'épaisseur (78, 79) des liaisons à culasse (52, 55) fermant l'agencement de noyau (48).

13. Dispositif électronique de puissance (13) selon l'une des revendications 1 à 12, dans lequel le nombre de lignes (66, 67, 68) correspond au nombre d'onduleurs (14, 15, 16), chaque ligne (66) comprenant un nombre d'enroulements primaires (60, 61, 62) correspondant au nombre de phases, ces enroulements primaires étant reliés par une connexion électrique spécifique (18a-18c) à une sortie de phase correspondante (14a-14c) d'un onduleur commun (14).

14. Dispositif électronique de puissance (13) selon l'une des revendications 1 à 13, dans lequel un dispositif de commande (17) est compris, lequel est conçu et aménagé de telle sorte que, lors du fonctionnement du dispositif d'électronique de puissance (13), la cadence des onduleurs (14, 15, 16) est décalée au moins temporairement les uns par rapport aux autres de telle sorte, que, pour au moins une connexion électrique spéciale (18a), la somme de la tension appliquée au début (60a) de l'enroulement primaire (60) et de la tension appliquée à l'au moins un deuxième enroulement primaire (63, 65) vers le même enroulement secondaire (21a) correspond à une courbe de tension ayant une fréquence de synchronisation plus élevée que les fréquences de synchronisation des courbes de tension des tensions individuelles.

15. Procédé d'atténuation de composantes à haute fréquence dans le courant de sortie d'un dispositif électronique de puissance (13) avec un agencement d'onduleur (23) et un dispositif transformateur (22, 38), l'agencement d'onduleur (23) étant relié électriquement côté primaire au dispositif transformateur (22, 38), le dispositif transformateur (22, 38) comportant côté secondaire au moins deux raccordements de phase (22a, 22b, 22c), qui sont conçues chacune pour le raccordement d'une ligne (27a, 27b, 27c) d'un réseau de distribution de courant (6), et les raccordements de phase (22a, 22b, 22c) du dispositif transformateur (22, 38) étant reliés électriquement entre eux au moyen d'une connexion étoile de condensateurs ou d'un circuit en coin de condensateurs, dans lequel, dans le dispositif transformateur (22, 38), au moins deux enroulements primaires (60, 63, 65) sont couplés par induction à un enroulement secondaire commun (21a) au moins pour une première phase (A, B, C), dans lequel, pendant le fonctionnement du dispositif électronique de puissance (13), au moins les deux enroulements primaires (60, 63, 65) sont alimentés au moins temporairement avec des tensions de sortie vers la même phase mais avec une courbe de tension différente par le dispositif onduleur (23), en commandant le dispositif onduleur (23) par rapport aux deux tensions de sortie avec des flancs d'horloge décalés dans le temps l'un par rapport à l'autre, de sorte que la somme des deux tensions de sortie correspond à une courbe de tension avec une fréquence d'horloge plus élevée que les fréquences d'horloge des courbes de tension des deux tensions de sortie individuelles.
